(19) **Europäisches Patentamt**
**European Patent Office**
**Office européen des brevets**

(11) **EP 4 635 612 A1**

(12) **EUROPEAN PATENT APPLICATION**
published in accordance with Art. 153(4) EPC

(43) Date of publication:
**22.10.2025 Bulletin 2025/43**

(21) Application number: **23902128.0**

(22) Date of filing: **31.07.2023**

(51) International Patent Classification (IPC):
**B01D 71/10** (2006.01)          **B01D 71/14** (2006.01)
**B01D 67/00** (2006.01)          **B01D 69/12** (2006.01)

(86) International application number:
**PCT/CN2023/110374**

(87) International publication number:
**WO 2024/124918 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2022 CN 202211608117**

(71) Applicant: **Hangzhou Cobetter Filtration
Equipment Co., Ltd.
Hangzhou, Zhejiang 311265 (CN)**

(72) Inventor: **JIA, Jiandong
Hangzhou, Zhejiang 311265 (CN)**

(74) Representative: **Lermer, Christoph
LermerRaible Patent- u. Rechtsanwalts
PartGmbB
Nove Haus - Design Offices
Luise-Ullrich-Straße 14
80636 München (DE)**

(54) **ASYMMETRIC REGENERATED CELLULOSE VIRUS-REMOVAL FILTER MEMBRANE AND PREPARATION PROCESS THEREFOR**

(57) The present invention relates to an asymmetric regenerated cellulose virus removal filter membrane and a preparation process thereof. The filter membrane includes a porous body, wherein the porous body includes a pre-filtering layer, a pore size transition layer and a separation layer, and a PMI average pore size of the filter membrane is 15-40 nm; the pre-filtering layer has a thickness of 20-80 $\mu$m; and a pore size variation coefficient $S_{(0-01)/(0.9-1)}$ of the pore size transition layer is not greater than 5, and the pore size transition layer has a thickness of not greater than 20 $\mu$m. The filter membrane takes cellulose raw materials with good hydrophilicity as membrane-forming materials, thus being relatively high in protein yield; it has a good retention efficiency for small and medium-sized viruses; the pre-filtering layer is thicker and thus has a high contaminant holding capacity.

Fig. 3

EP 4 635 612 A1

**Description**

**TECHNICAL FIELD**

The invention relates to the field of membrane separation technology, in particular to an asymmetric regenerated cellulose virus removal filter membrane and a preparation process thereof.

**BACKGROUND**

Biological agents are generally prepared from various microorganisms (such as bacteria, bacteriophages, and rickettsia), microbial metabolites, parasites, blood or tissues of human or animals, and the like through modern biotechnology and chemical methods, which have good diagnostic, preventive, and therapeutic effects on specific infectious and immune diseases.

The unique targeting, high efficiency, and low side effects of biological agents have led to their rapid development over the past few decades. With the rapid development of biological agents, increasing the concentration of active substances (proteins) in biological agents is currently recognized as one of the development directions. High concentration biological agents are generally administered by subcutaneous injection. Compared with intravenous injection, subcutaneous injection is shorter in treatment time and causes less pain for patients. In addition, the filling volume of high concentration biological agents is greatly reduced, which can significantly save production and transportation costs.

In the production process of biological agents, viruses may be introduced into both raw materials and various production processes. Whether it is the latest *Chinese Pharmacopoeia* or Q5A *Virus Safety Evaluation of Biological Products* issued by ICH, clear requirements are put forward for the virus safety of biological agents. The virus safety evaluation and test reports will directly affect the drug declaration and approval results. Therefore, all biopharmaceutical companies must introduce virus removal and/or virus inactivation steps when producing various biological agents to ensure that the biological agents have no virus safety issues.

Membrane separation technology is widely used in the production of various biological agents due to its high separation efficiency, low energy consumption, small footprint, and especially its ability to remove viruses without easily causing denaturation of protein active substances, so as to widely filter out viruses of various sizes in biological agents and improve the virus safety of biological agents. The core part of membrane separation technology is a filter membrane.

For example, in the Chinese invention patent application document with the application publication number of CN113842792A, an asymmetric PES filter membrane for virus removal is disclosed. The PES filter membrane includes a main body, the main body includes a pre-filtering layer and a separation layer for retaining viruses, and the other side of the pre-filtering layer and the other side of the separation layer are transitioned by continuous fibers. The PES filter membrane has a good virus retention efficiency (LRV>4), but the poor hydrophilicity of the PES material itself (even after hydrophilic modification, the hydrophilicity is also poor) determines that it has a high adsorption effect on proteins. Once the protein concentration in biological agents is high, the proteins adsorbed by the filter membrane will easily lead to filter membrane blockage and rapid flux decay, and will also lead to a decrease in the concentration of biological agents, which will affect the quality of biological agents.

For example, the U.S. patent US20200238221A1 filed by Sartorius Company discloses a porous single-layer polymer membrane, at least one major surface of which has a surface porosity of at least 40%, and the total porosity of the polymer membrane is 0.8 to 1.4 times the surface porosity of at least 40%; and the polymer membrane has an asymmetry factor of 1.5 to 10. The filter membrane is mainly used for filtering viruses, proteins or macromolecules, and it can only retain large particles of hundreds of nanometers. Although the filter membrane has a large pore size, it is not easy to retain proteins with smaller particle sizes, nor is it easily blocked by viruses and other substances. Therefore, the flux decay rate is slow and the load is high. However, the larger pore size of the filter membrane determines that the filter membrane has no filtering effect for small-sized viruses, e.g., the virus with a particle size of 20 nm, and therefore, the desired retention efficiency for small-sized viruses cannot be achieved.

For example, the Chinese patent with the authorization announcement number of CN1759924B filed by Millipore Corporation discloses a multi-layer composite ultrafiltration membrane. The composite ultrafiltration membrane includes at least one first porous membrane layer having a first face and an equivalent second face, and at least one second porous membrane layer having an equivalent first face and a second face; and the first layer is superposed in connection with the second layer and has a porosity connection transition region from the equivalent first face of the second layer to the equivalent second face of the first layer, where at least one of the layers is an asymmetric ultrafiltration membrane.

At least one layer of the above-mentioned ultrafiltration membrane is an asymmetric ultrafiltration membrane. The asymmetric ultrafiltration membrane means that the ultrafiltration membrane layer has a large pore side with a larger pore size and a small pore side with a smaller pore size. In order to reduce the risk of virus leakage, the small pore side of the asymmetric ultrafiltration membrane needs to have a better retention efficiency for viruses (if the large pore side has a good retention efficiency, the small pore side will likely lead to a significant decrease in the flux of the filter membrane), and the virus retention position on the small pore side should not be too close to the second face of the asymmetric ultrafiltration membrane (otherwise the risk of virus leakage from the second face will be greatly increased). However, due to the asymmetric nature of the ultrafiltration membrane layer, the pore size of the small pore side close to the second face should be smaller than that of the small pore side close to the first face, and the membrane-forming material used in each embodiment of this patent is polyethersulfone (PES); the characteristics of the PES material make its hydrophilicity still poor even after hydrophilic modification; and if the membrane-forming material with poor hydrophilicity is combined with the asymmetric membrane layer at a pore structure with a small pore size close to the second face, the adsorption rate of the filter membrane for proteins is likely to be high, and the protein yield is low. However, in the biomedical field, the high price of proteins makes low protein yields difficult to accept. Furthermore, asymmetric ultrafiltration membranes mean that viruses and other substances are likely to be trapped within a small range of membrane thickness, which may lead to clogging of the ultrafiltration membrane layer and rapid decay of flux, resulting in a low load of the filter membrane. Therefore, although the filter membrane has a good retention efficiency for viruses, its load and protein yield are often low.

In addition, a preparation process of the above-mentioned ultrafiltration membrane is mainly as follows: casting two solutions onto the surface of a carrier, where both the two solutions have lower critical solution temperature (LCST) and the LCST of the ultrafiltration layer is high, or the ultrafiltration layer has no LCST or measurable LCST, while the microporous layer solution has LCST; heating the cast multi-layer liquid sheet to a predetermined temperature that is above the LCST of the microporous layer and below that of the ultrafiltration layer, and then immersing into a precipitating bath to form a wet multi-layer ultrafiltration membrane; alternatively, supplying each of batching outlets with a different polymer solution and applying the solution onto the surface of the moving carrier to form multiple coating layers on the carrier; and distributing the multiple layers with only partial phase separation of the preceding layer before coating each successive layer, and subjecting the multiple layers to phase separation to complete the phase separation and form a wet multi-layer ultrafiltration membrane. That is to say, the phase separation mechanism is that the polymer solution is a homogeneous liquid at low temperature. With the increase of temperature, the LCST of the microporous layer is reached, which makes the materials in the microporous layer no longer soluble in each other and forms phase-separation curing; and the ultrafiltration layer is subjected to phase-separation curing through the subsequent precipitating bath. The phase separation mechanism of the ultrafiltration layer is different from that of the microporous layer, and the microporous layer will quickly reach the LCST or above in presence of the carrier so as to undergo phase-separation curing, while the ultrafiltration layer is subjected to phase-separation curing in the precipitating bath after the complete phase-separation curing of the microporous layer.

This means that for the preparation process of the above-mentioned ultrafiltration membrane, in order to achieve "high-temperature induced phase separation of the microporous layer" and "precipitating bath induced phase separation of the ultrafiltration layer", the solution of the microporous layer must be cast onto the carrier first, and then the solution of the ultrafiltration layer is cast onto the solution of the microporous layer. Otherwise, the solution of the ultrafiltration layer will not be able to directly contact the precipitating bath, and the carrier must first heat the solution of the ultrafiltration layer to further heat the solution of the microporous layer, which will cause the failure in formation of the multi-layer ultrafiltration membrane; and the preparation process has many limitations. Moreover, during the preparation process, the ultrafiltration membrane layer maintains a liquid film state for a long time, which is likely to lead to a decrease in the uniformity of the ultrafiltration membrane layer, and thus in turn leads to a decrease in the uniformity of the pore structure of the ultrafiltration membrane layer after phase-separation curing. This is also one of the defects of this preparation process. In addition, the different phase separation mechanisms of the two layers of casting solutions lead to certain differences in their pore structure and fiber structure, which are manifested in the clear boundary lines in the cross-sectional scanning electron microscope (SEM) of the ultrafiltration membrane mentioned above.

For various biological agents with proteins, peptides and their derivatives as the main active substances, filter membranes with high virus retention efficiency often have a faster flux decay rate and lower protein yield, while filter membranes with slower flux decay rate often cannot achieve the desired virus retention efficiency, which is an urgent and difficult problem to be solved by the virus removal filter membranes currently used in the virus filtration process of various biological agents.

## SUMMARY

The invention provides an asymmetric regenerated cellulose virus removal filter membrane and a preparation process thereof. The filter membrane provided by the invention takes cellulose raw materials with good hydrophilicity as membrane-forming materials, thus being relatively high in protein yield; the filter membrane has a PMI average pore size of 15-40 nm, PMI pore size is obtained by testing via a Porous Materials Inc pore size tester, thus having a good retention efficiency for small and medium-sized viruses; a pre-filtering layer is thicker and thus has a good retention efficiency for large particulate matters and a high contaminant holding capacity; a pore size transition layer of the filter membrane is small in thickness and pore size variation coefficient, so that the pore size of the pore size transition layer has not undergone a sudden change, making it less prone to local blockage and rapid flux decay due to concentrated retention caused by sudden pore size changes, and the pore size transition layer has a large load; and the substantially symmetrical structure of a separation layer ensures that the separation layer has a good retention efficiency for small and medium-sized viruses, while not introducing an extremely small pore structure, making it less prone to blockage and rapid flux decay due to the retention of a large number of viruses within a small range. The absence of an extremely small pore structure also allows the filter membrane to have a large flux. Therefore, the filter membrane in the invention not only has good virus retention efficiency, but also has high flux, load, and protein yield.

In the first aspect, the invention provides an asymmetric regenerated cellulose virus removal filter membrane, which adopts the following technical solutions.

An asymmetric regenerated cellulose virus removal filter membrane, including a porous body having non-directional tortuous paths therein, one side surface of the porous body is a liquid inlet surface, and another side surface of the porous body is a liquid outlet surface; an average pore size measured by SEM at the liquid inlet surface is larger than an average pore size measured by SEM at the liquid outlet surface; the porous body includes a pre-filtering layer, a pore size transition layer and a separation layer in sequence from the liquid inlet surface to the liquid outlet surface, one side of the pre-filtering layer is the liquid inlet surface, and one side of the separation layer is the liquid outlet surface;

a PMI average pore size of the filter membrane is 15-40 nm;
the pre-filtering layer has a thickness of 20-80 $\mu$m;
a pore size variation coefficient $S_{(0-0.1)/(0.9-1)}$ of the pore size transition layer is not greater than 5, and the pore size transition layer has a thickness of not greater than 20 $\mu$m;
the separation layer has a substantially symmetrical structure; and
the pore size transition layer is considered to have a membrane thickness of 0 on a side close to the liquid inlet surface, and a membrane thickness of 1 on a side close to the liquid outlet surface,

$$\text{pore size variation coefficient } Sx/y = \frac{\text{an average pore size measured by SEM at the region x of the pore size transition layer}}{\text{an average pore size measured by SEM at the region y of the pore size transition layer}}.$$

By adopting the above technical solution, the separation layer in the invention refers to a region having a retention efficiency for small and medium-sized viruses in the thickness direction of the filter membrane, while the pre-filtering layer refers to a region having a retention efficiency for large and medium-sized viruses in the thickness direction of the filter membrane, and the pore size transition layer refers to a region between the pre-filtering layer and the separation layer.

The PMI average pore size of the filter membrane can reflect its retention ability for particulate matters of corresponding size to a certain extent. When the filter membrane has a different surface morphology (such as a different pore size, fiber structure, and thickness), the filter membrane has a different PMI average pore size. Different applications require filter membranes to have different virus retention abilities. At this time, filter membranes with different PMI average pore sizes can be selected according to actual needs. When it is necessary to filter large-sized particles and viruses, it is not advisable to choose a filter membrane with a small PMI average pore size, because the small pore size of the filter membrane is easily blocked, which will lead to rapid flux decay; and when it is necessary to filter small-sized particles and viruses, it is not advisable to choose a filter membrane with a large PMI average pore size, because small-sized particles and viruses can easily penetrate the filter membrane, which will lead to a risk of virus leakage. Therefore, in order to ensure that the filter membrane has a good retention efficiency for the virus to be filtered, it is necessary to select a filter membrane with an appropriate PMI average pore size.

For example, when the PMI average pore size of the filter membrane is 15-25 nm, the filter membrane often has a good retention efficiency for small-sized viruses with particle sizes of only about 20-30 nm (such as PP7 phage with a particle size of about 25 nm). However, when the PMI average pore size of the filter membrane is 25-40 nm, the filter membrane has a good retention efficiency for medium-sized viruses with slightly larger particle sizes of about 30-45 nm (such as hepatitis B virus with a particle size of about 42 nm). The filter membrane in the invention specifically defines the PMI average pore size as 15-40 nm, so it has a good retention efficiency for small and medium-sized particles and viruses (e.g., the particles and viruses with particle sizes of about 20-45 nm), and the filter membrane with the required PMI average pore size can be selected according to different application scenarios.

It can be understood that larger-sized viruses or particulate impurities (such as HIV with a particle size of 80 nm or more) are generally filtered out in the previous process, leaving only a very small amount of residue, so there is no need for targeted treatment of large-sized viruses or particulate impurities. However, large and medium-sized viruses or particulate impurities have not been completely filtered out in the previous process, so there may still be some large and medium-sized viruses or particulate impurities in a feed solution.

In addition, as mentioned above, there are often large and medium-sized viruses or particulate impurities in the feed solution, and the separation layer of the filter membrane mainly plays a role in retaining small and medium-sized viruses or particulate impurities. If large and medium-sized viruses or particulate impurities are leaked into the separation layer, it will be likely to block the pore structure with a smaller pore size at the separation layer; and once the pore structure with the smaller pore size at the separation layer is blocked, it will not only lead to rapid flux decay of the filter membrane, but also further increase the risk of small and medium-sized viruses leaking through a pore structure with a larger pore size at the separation layer. The filter membrane in the invention has the relatively thick pre-filtering layer (not less than 20 $\mu$m), so that the pre-filtering layer is ensured to have a large enough space for containing contaminants to retain large and medium-sized particles or viruses in the feed solution. Of course, the thickness of the pre-filtering layer should not be too large (for example, greater than 80 $\mu$m). This is because although further increasing the thickness of the pre-filtering layer can to some extent improve the contaminant holding capacity of the filter membrane to accommodate large and medium-sized particles or viruses, the general filtration mode of the virus removal filter membrane is dead-end filtration, and the external pressure is the main driving force in the filtration process. Therefore, the filter membrane is subjected to a high pressure from the feed solution, while the pore structure of the pre-filtrating layer has a larger pore size. Combined with the inherently softer texture of cellulose materials, it is easy for the pore structure to collapse under the pressure of the feed solution. If the thickness of the pre-filtrating layer is too large, the possibility of structural collapse will be greatly increased (large pore structures are more prone to defects, and the increase in the thickness of the pre-filtrating means an increase in the amount of large pore structures, which also increases the likelihood of defects occurring). Once the pore structure of the pre-filtrating layer collapses, both its ability to guide the feed solution and its ability to hold contaminants will be significantly decreased.

In addition, the invention specifically controls the thickness and pore size variation coefficient of the pore size transition layer to ensure that the filter membrane has a larger load and flux. This is because when the thickness of the pore size transition layer is too large, it indicates that there are some regions in the filter membrane that have no retention efficiency for large and medium-sized viruses (not without retention ability), nor can they retain small and medium-sized viruses. Although the increase in the thickness of this region can reduce the impact of large and medium-sized viruses on the separation layer, an excessively thick pore size transition layer also often means excessive resistance to the feed solution, resulting in low flux of the filter membrane. In addition, since the overall pore size variation coefficient of the pore size transition layer is not greater than 5, it indicates that the pore size variation form of the pore size transition layer is not a sudden change with a fast change rate, but a gradual change with a slow change rate. Since there is no sudden change in pore size of the pore size transition layer, the phenomenon that rapid flux decay of the filter membrane is caused by local blockage of the filter membrane due to local concentrated retention can be avoided.

In the invention, the separation layer of the filter membrane is specifically set to a substantially symmetrical structure (basic symmetry means that a change gradient of the average pore size measured by SEM is not greater than 5 nm/$\mu$m, not that the pore size is completely unchanged), which can ensure that the separation layer has good virus retention ability while ensuring higher contaminant holding capacity and flux. This is because the separation layer with larger asymmetry achieves virus retention through the continuous reduction of the pore size, and when the pore size is reduced to a certain extent, it will produce a strong retention efficiency for the viruses of the corresponding size. Therefore, for the separation layer with larger asymmetry, the viruses tend to be retained in a larger amount within a smaller thickness range; and combined with the smaller pore size at this location, a large amount of virus retention can easily lead to local blockage of the filter membrane, resulting in rapid flux decay.

The substantially symmetrical separation layer tends to have a larger retention thickness range for viruses. This is because the pore structure with relatively small pore size in the separation layer has a certain thickness when being combined with the separation layer, and the pores are continuously stacked in the thickness direction, and the produced retention efficiency will be smaller than the actual pore structure size, for example, the projection surface of the upper pore structure may be the fiber structure of the lower pore structure, and the fiber structure separates the upper pore structure, which improves the retention efficiency of the pore structure on smaller particulate matters. By stacking this pore structure in the direction of membrane thickness, it can ensure that the pore structure has a good retention efficiency for smaller particles, and the viruses are more evenly distributed, making the separation layer region less prone to blockage and the flux decay slower. In addition, compared with the separation layer with larger asymmetry, the substantially symmetrical separation layer does not introduce an extremely small pore structure, and the decrease rate of contaminant holding capacity and flux is much greater than the decrease rate of pore sizes. For example, if the pore structure is regarded as a virtual sphere, when the pore size of the pore structure is reduced to half, the volume of the virtual sphere of the pore structure will be reduced to one eighth, which means that the pore size of the pore structure that can accommodate small-sized viruses will be greatly reduced, and the space of a flow channel through which the feed solution passes will also be greatly reduced (even if only considering the cross-sectional area of the flow channel, it will be reduced to one fourth). Therefore, a small decrease in the pore size of the pore structure will lead to a significant decrease in the contaminant holding capacity and flux of the pore structure, while the impact of a small decrease in the pore structure on the virus retention efficiency is likely to be minimal (i.e., there is a marginal diminishing effect).

In addition, the filter membrane provided in the invention uses cellulose materials as membrane-forming materials, thus having a good hydrophilic effect and low protein adsorption to improve protein yield. Based on the substantially symmetrical structure of the separation layer (the separation layer having the pore structure with a small pore size is the most prone to protein adsorption in the filter membrane), there is no extremely small pore structure in the separation layer, making it less likely to adsorb proteins, thereby improving protein yield.

To sum up, the filter membrane in the invention has high flux and load because of the large thickness of the pre-filtering layer structure (not easy to block), the small thickness of the pore size transition layer without a pore size sudden change structure (not easy to block and low in resistance), and the basic symmetry of the separation layer (not easy to block and low in resistance). Due to the appropriate PMI average pore size, the filter membrane has a high virus retention efficiency for viruses of corresponding size. The separation layer is substantially symmetrical (without small pores and sudden change) and the fiber material with good hydrophilicity is used as the membrane-forming material, so that the protein yield of the filter membrane is higher (the protein yield of the filter membrane in the invention can reach 98% or more). Therefore, the filter membrane in the invention has good virus retention efficiency, high flux, and high load.

It can be understood that the non-directional tortuous paths refer to randomly oriented groove structures and/or discretely distributed pore structures, and all the non-directional tortuous paths are communicated with each other. During filtration, the feed solution flows in the tortuous pore structure, and impurities in the feed solution are retained by means of screening and adsorption.

It should be noted that although the filter membrane in the invention has a multi-layer structure, it is not obtained by compounding multiple layers of membranes, and there is no clear boundary line on the filter membrane in the invention, so it is not easy to separate layers. In addition, during a colloidal gold retention test and a virus challenge test conducted in the invention, the pressures in the two tests are both 30 psi. Because the retention region of the filter membrane for particles with different particle sizes may change under different test pressures, the risk of virus leakage is also different. Therefore, it is necessary to limit the test pressure.

The measurement method for various surface morphology parameters (such as fiber diameter and pore size) of the filter membrane can be implemented by using scanning electron microscope to characterize the morphology of the membrane structure, then using computer software (such as Matlab and NIS-Elements) or manually measuring, and calculating accordingly. During the preparation process of the membrane, in the direction perpendicular to the membrane thickness (if the membrane is in the form of a flat membrane, then this direction is the plane direction; if the membrane is in the form of a hollow fiber membrane, then this direction is perpendicular to the radial direction), its various characteristics, such as pore size distribution, are roughly uniform and basically remain consistent; and therefore, the average pore size of certain regions on the corresponding plane can be measured to reflect the overall average pore size on that plane. In actual measurement, the membrane surface (or cross section) can be characterized using an electron microscope to obtain a corresponding SEM image, and a certain area, such as 1 $\mu m^2$ (1 $\mu m$ multiplied by 1 $\mu m$) or 25 $\mu m^2$ (5 $\mu m$ multiplied by 5 $\mu m$), can be selected. The specific area depends on the actual situation. Then, the pore sizes of all pores on that area are measured by corresponding computer software or manually measuring. After that, calculation is carried out to obtain the average pore size of that region. Of course, those skilled in the art can also obtain the above parameters by other measurement means, and the above measurement means are for reference only.

Optionally, the pore size variation coefficient $S_{(0-0.1)/(0.4-0.5)}$ of the pore size transition layer is 1.1-1.6; and/or the pore size variation coefficient $S_{(0.5-0.6)/(0.9-1)}$ of the pore size transition layer is 1.1-1.6.

By adopting the above technical solution, the pore size variation coefficient of the first half of the pore size transition layer and the pore size variation coefficient of the second half of the pore size transition layer do not exceed 1.6, indicating that there is no sudden change structure in pore sizes in both the first half and second half of the pore size transition layer, which greatly reduces the possibility of blockage of the pore size transition layer caused by concentrated retention due to the sudden change structure in the pore sizes.

Optionally, a ratio of the pore size variation coefficient $S_{(0-.0)/(0.4-0.5)}$ of the pore size transition layer to the pore size variation coefficient $S_{(0.5-0.6)/(0.9-1)}$ of the pore size transition layer is 0.8-1.2.

By adopting the above technical solution, the pore size variation coefficients of the first half (i.e., the region where the thickness of the pore size transition layer is 0 to 0.5) and the second half (i.e., the region where the thickness of the pore size transition layer is 0.5 to 1) of the pore size transition layer are both 1.1-1.6, with a ratio of the two pore size variation coefficients being only 0.8-1.2, which indicates that the phase separation dynamics of the whole pore size transition layer does not change greatly during phase separation, further demonstrating that the first half and second half of the pore size transition layer are not prone to sudden change in pore sizes. Accordingly, the possibility of pore size transition layer blocking is reduced, and the filter membrane is ensured to have a high load.

Optionally, a difference between the average pore size measured by SEM in the region of 0.3-0.5 of the pore size transition layer and the average pore size measured by SEM in the region of 0.5-0.7 of the pore size transition layer is 30-100 nm.

By adopting the above technical solution, the size of the pore structure of the pore size transition layer varies in a gradient along the thickness direction, and the region of 0.3-0.7 in the thickness is a relatively middle region of the pore size transition layer. Due to the relatively small pore size variation coefficients of the first half and second half of the pore size transition layer, combined with the total thickness of the pore size transition layer not exceeding 20 $\mu m$ and the pore size variation in the middle region of the pore size transition layer not exceeding 100 nm, it indicates that the pore size variation coefficients of the first half, middle region and second half of the pore size transition layer as well as the absolute values of pore size variations are all relatively small. Therefore, the overall structure of the pore size transition layer has no sudden change in pore sizes, which naturally makes it less likely for impurities to be concentrated and retained due to sudden change in pore sizes, so that the possibility of the rapid flux decay of the filter membrane being caused by blockage in the pore size transition layer is reduced.

Optionally, the average pore size measured by SEM at the pore size transition layer is 100-300 nm, and the average pore size measured by SEM at the pore size transition layer is less than the average pore size measured by SEM at the pre-filtering layer and less than the average pore size measured by SEM at the separation layer.

By adopting the above technical solution, the average pore size measured by SEM at the pore size transition layer should not be too large or too small. If the average pore size measured by SEM at the pore size transition layer is too large, it indicates that the average pore size measured by SEM at the pre-filtering layer is larger. Although large particle impurities can also be retained by stacking the pore structure, the leakage risk of large particle impurities is higher. Since the average pore size measured by SEM at the pore size transition layer is also larger, the probability of large particle impurities penetrating the pre-filtering layer and the pore size transition layer at the same time is greatly increased, and the large particle impurities are likely to block the pore structure with a small pore size in the separation layer, resulting in rapid flux decay of the filter membrane and an increase in the risk of virus leakage. If the average pore size measured by SEM at the pore size transition layer is too small, it means that the average pore size measured by SEM at the separation layer is smaller. Although the decrease in the pore size of the pore structure of the separation layer can further improve the LRV of the filter membrane, the resistance to the feed solution is greatly improved, resulting in a decrease in the flux of the filter membrane. In addition, the decrease in the pore size of the pore structure of the separation layer will also lead to a decrease in the contaminant holding capacity of the separation layer, resulting in an increase in the flux decay rate of the filter membrane.

Optionally, a fiber diameter measured by SEM in the region of 0-0.5 of the pore size transition layer is 20-50 nm; and a fiber diameter measured by SEM in the region of 0.5-1 of the pore size transition layer is 20-45 nm.

By adopting the above technical solution, the pore size of the pore size transition layer varies in a gradient, and the pore size in the first half of the pore size transition layer is larger than that in the second half thereof. If the fiber diameter measured by SEM in the fiber structure of the first half of the pore size transition layer is less than 20 nm, it will likely that the pore structure of the first half of the pore size transition layer cannot be well supported; if the fiber diameter measured by SEM in the fiber structure is greater than 50 nm, although the pore structure can be well supported, the fiber structure as a solid part has excessive resistance to the feed solution, which will easily lead to a decrease in flux. Similarly, for the pore structure in the second half of the pore size transition layer, the fiber diameter measured by SEM in the fiber structure needs to be controlled within 20-45 nm.

Optionally, a difference between the fiber diameter measured by SEM in the region of 0.3-0.5 of the pore size transition layer to the fiber diameter measured by SEM in the region of 0.5-0.7 of the pore size transition layer is not greater than 10 nm.

By adopting the above technical solution, the difference in fiber diameters measured by SEM in the middle part of the pore size transition layer of the filter membrane in the invention is small, and the difference between the fiber diameter measured by SEM in the region of 0.3-0.5 of the pore size transition layer to the fiber diameter measured by SEM in the region of 0.5-0.7 of the pore size transition layer is not greater than 10 nm. This means that not only the pore size of the pore structure but also the diameter of the fiber structure of the pore size transition layer transition in a relatively moderate manner, which is reflected in the SEM image of the filter membrane that there is no clear boundary line or delamination phenomenon in the cross section.

When observing the SEM image of the cross section of the filter membrane, its surface morphology is the main factor that affects the impression of the SEM image, such as the pore structure and fiber structure. If there is a significant difference in pore size and fiber structure diameter between the first half of the pore size transition layer and the second half of the pore size transition layer, a clear boundary will be shown in the SEM image. Although there is a slight difference in pore size between the first half of the pore size transition layer and the second half of the pore size transition layer, the fiber structure of the filter membrane in the invention is almost the same, which means that when filtering, the feed solution will not be subjected to a resistance with abnormal changes due to the structural sudden change of the solid part (that is, the fiber structure), and the feed solution will flow smoothly, making it less likely to be concentrated and retained in the pore size transition layer. This is of great help in improving the load of the filter membrane.

Optionally, the average pore size measured by SEM at the pre-filtering layer is 200-800 nm; and the average pore size measured by SEM at the separation layer is 30-80 nm, and the separation layer has a thickness of 20-50 μm.

By adopting the above technical solution, the pre-filtering layer mainly plays a role in retaining large particulate matters in the feed solution. Therefore, the pre-filtering layer needs to have a high contaminant holding capacity and a good retention efficiency for large particulate matters. If the average pore size measured by SEM at the pre-filtering layer is too large (e.g., greater than 800 nm), although the pre-filtering layer having the pore structure with a larger pore generally has a larger contaminant holding capacity, its retention efficiency for large particulate matters is insufficient. Once large particulate matters leak from the pre-filtering layer, it will cause blockage of the pore size transition layer or the separation layer, leading to rapid flux decay of the filter membrane. In addition, the too large average pore size measured by SEM at the pre-filtering layer also means a decrease in the pressure resistance performance of the pre-filtering layer. Once the pre-filtering layer undergoes structural collapse under the large pressure of the feed solution, it will lead to a decrease in both the membrane flux and load. Therefore, although increasing the average pore size measured by SEM at the pre-filtering layer within a certain range is beneficial for improving the load of the filter membrane and reducing the flux decay rate, the average pore size measured by SEM at the pre-filtering layer should not be too large, as it can actually lead to a decrease in the load of the filter membrane and a faster flux decay rate. The average pore size measured by SEM at the pre-filtering layer should not be too small (e.g., less than 200 nm). As a pre-filtering layer that plays a role in pre-filtering large particulate matters in the feed solution, it needs to have a large space for accommodating large particulate matters to avoid rapid blockage by them.

The separation layer of the filter membrane mainly plays a role in retaining small and medium-sized particulate matters, and considering the high requirements for virus leakage risk in the biomedical field, it is necessary to ensure that the filter membrane has no risk of virus leakage. Therefore, the separation layer must have a good retention efficiency for small and medium-sized viruses. On this basis, in order to ensure that the filter membrane has a high load and a slow flux decay rate, it is also necessary for the separation layer to have a large space for accommodating small and medium-sized particles, so as to prevent the pore structure of the separation layer from being quickly blocked. Due to the fact that the pore size of the pore structure of the separation layer in the invention remains basically unchanged along the thickness direction, the retention of small and medium-sized viruses is mainly achieved by stacking the pore structure in the thickness direction. Therefore, if the average pore size measured by SEM at the separation layer is too large (e.g., greater than 80 nm) or the thickness of the separation layer is too small (e.g., less than 20 $\mu$m), it often means an increase in the risk of virus leakage. Of course, if the average pore size measured by SEM at the separation layer is too small (e.g., less than 30 nm) or the thickness of the separation layer is too large (e.g., greater than 20 $\mu$m), although the virus retention efficiency of the filter membrane can be further improved, and the risk of virus leakage can be reduced, it will also lead to a significant decrease in the flux of the filter membrane.

It should be noted that at present, it is generally recognized at home and abroad that if the virus retention efficiency of a virus removal filter membrane can reach LRV>6, it is considered that the virus removal filter membrane has basically filtered out all viruses. On this basis, the retention efficiency of the filter membrane is further improved (for example, by further reducing the average pore size measured by SEM at the liquid outlet surface of the filter membrane), although theoretically it can indeed further improve the virus retention efficiency of the filter membrane, it is often required at the cost of a substantial reduction in flux. Moreover, there is a marginal diminishing effect on the improvement of the virus retention efficiency of the filter membrane, which means that if the virus retention efficiency of the filter membrane is already good, the further slight improvement of the virus retention efficiency of the filter membrane is likely to be at the cost of a relatively large drop in flux. However, when the average pore size measured by SEM at the liquid outlet surface of the filter membrane is within a range of 30-45 nm, not only can the risk of virus leakage of the filter membrane be significantly reduced, but also the flux of the filter membrane is less reduced. At this time, the average pore size measured by SEM at the liquid outlet surface can be properly adjusted according to the actual demand to obtain a better virus retention efficiency or a higher flux.

Optionally, the change gradient of the average pore size measured by SEM at the pre-filtering layer is at least 2 nm/$\mu$m larger than that of the average pore size measured by SEM at the separation layer, and the change gradient of the average pore size measured by SEM at the separation layer is not greater than 3 nm/$\mu$m.

By adopting the above technical solution, as mentioned above, the change in the pore size of the pore structure will bring about a greater change in the cross-sectional area of the pore structure and the volume of the pore structure, which means that the pore structure with a smaller pore size in the filter membrane has a greater influence on the flux of the filter membrane. In the invention, the change gradient of the average pore size measured by SEM at the separation layer of the filter membrane is not greater than 3 nm/$\mu$m, combined with the average pore size measured by SEM at the separation layer is 30-80 nm, it indicates that there is no extremely small pore structure in the separation layer, ensuring that the filter membrane has a large flux. The change gradient of the average pore size measured by SEM at the pre-filtering layer should not be too small. This is because if a substantially symmetrical structure similar to that in the separation layer is formed in the pre-filtering layer, the pre-filtering layer needs a larger thickness to ensure the retention efficiency for large-sized particles. When the thickness of the pre-filtering layer is too large, not only the resistance to the feed solution increases, but also the possibility of structural collapse of the pre-filtering layer under the action of the high pressure of the feed solution increases. The pre-filtering layer with a gradient change in pore size cannot only ensure the retention efficiency for large-sized particles, but also ensure a sufficient space for accommodating large-sized particles in combination with the large pore size (200-800 nm) of the pre-filtering layer.

Optionally, a fiber diameter measured by SEM at the pre-filtering layer is 60-150 nm; and a fiber diameter measured by SEM at the separation layer is 20-40 nm.

By adopting the above technical solution, the filter membrane in the invention is made of a soft fiber material, and the average pore size measured by SEM at the pre-filtering layer of the filter membrane is 200-800 nm. Moreover, the pre-filtering layer, as a layer structure directly bearing the pressure from the feed solution, is prone to structural collapse under the pressure from the feed solution. On this basis, the pre-filtering layer has a fiber structure with a larger size than the separation layer and the pore size transition layer, which can provide a stronger support for the pore structure with a larger pore size of the pre-filtering layer, thereby ensuring that the pre-filtering layer structure in which the filter membrane directly bears the pressure from the feed solution has a strong self-supporting performance, and is not prone to structural collapse under the pressure from the feed solution; and therefore, the filter membrane is ensured to have a high load and flux.

Compared with the fiber structure with a larger size in the pre-filtering layer, the size of the fiber structure in the separation layer should not be too large. This is because the pore size of the pore structure of the separation layer is relatively small, the three-dimensional network structure formed by the fiber structure is denser, and the connections between fibers are also closer, which makes the separation layer already have a better self-supporting ability than the pre-filtering layer. In addition, compared with the pre-filtering layer that directly bears the pressure from the feed solution, the separation layer is closer to the liquid outlet surface and does not directly bear the pressure from the feed solution, so that the fiber diameter of the separation layer does not need to be too large. Moreover, the further increase in the fiber diameter of the separation layer will also lead to the further increase in the resistance of the feed solution at the separation layer (the resistance of the solid part to the feed solution becomes larger). As mentioned above, the surface morphology (such as pore structure and fiber structure) of the separation layer of the filter membrane is an important factor affecting the flux of the filter membrane. Therefore, the further increase in the fiber diameter of the separation layer is likely to lead to a significant decrease in the flux of the filter membrane, resulting in a decrease in the filtration efficiency and practicality of the filter membrane.

Optionally, the liquid inlet surface includes a plurality of strip-shaped first fibers, the plurality of first fibers are connected to each other, and adjacent first fibers surround to form a first pore;

an average pore size measured by SEM at the first pores is 350-2000 nm; and/or,
the liquid outlet surface comprises a plurality of circular hole-shaped second pores; and
an average pore size measured by SEM at the second pores is 25-45 nm.

By adopting the above technical solution, the average pore size measured by SEM at the first pores should not be too large (e.g., exceeding 2000 nm), so as not to cause the porous body near the liquid inlet surface of the filter membrane to collapse due to insufficient compressive strength when the structure is pressed, thereby avoiding a decrease in the flux and load of the filter membrane; and the average pore size measured by SEM at the first pores should not be too small (e.g., less than 350 nm), so as to avoid the phenomenon that the large resistance to the feed solution and the insufficient contaminant holding capacity of pre-filtering lead to a decrease in flux and load.

The average pore size measured by SEM at the second pores should not be too large (e.g., exceeding 45 nm) as well, because the separation layer of the filter membrane in the invention has a pore structure with a basically unchanged pore size. Although the thickness of the separation layer can still form a good retention for small and medium-sized viruses, with the extension of filtration time, the leakage risk of small and medium-sized viruses is greatly increased. The porous body near the liquid outlet surface of the filter membrane is the final barrier of the filter membrane, and the smaller average pore size measured by SEM at the second pores can ensure efficient retention for a small amount of small and medium-sized viruses leaked from the separation layer. The average pore size measured by SEM at the second pores should not be too small (e.g., less than 30 nm), because the pore structure with a too small pore size at the liquid outlet surface has too much resistance to the feed solution, resulting in a significant decrease in the flux of the filter membrane.

Optionally, in all the second pores, the second pores larger than the average pore size measured by SEM by 30 nm account for no more than 20% of the total number of second pores; and in all the second pores, the second pores smaller than the average pore size measured by SEM by 20 nm account for no more than 20% of the total number of second pores.

By adopting the above technical solution, as mentioned above, the most important factor affecting the flux of the filter membrane is the small pore structure in the filter membrane. Although the small pore structure has a better virus retention efficiency, a slight decrease in the pore size of the small pore structure will lead to a relatively large decrease in the cross-sectional area of the small pore structure, resulting in a relatively large decrease in the flux.

The inventors of the invention have found that for the filter membrane with the specific structure in the invention, if the proportion of the second pores larger than the average pore size measured by SEM by 30 nm in all the second pores exceeds 20%, it will greatly increase the risk of virus leakage after the filter membrane undergoes process retention (such as top wash LRV). This is because the pore structures with large pore sizes in the second pores account for a relatively high proportion, and after the process retention, the viruses retained in the separation layer are likely to be released due to reasons such as a Brownian motion. At this time, re-pressurization for filtration will likely cause the viruses released from the separation layer to leak from the second pores with a high proportion and large pore sizes, resulting in an increase in the risk of virus leakage after the process retention. If the proportion of the second pores smaller than the average pore size measured by SEM by 20 nm in all the second pores exceeds 20%, although the risk of virus leakage is reduced, these second pores with a high proportion and small pore sizes will have a greater impact on the flux of the filter membrane. When the proportion of the second pores larger than the average pore size measured by SEM by 30 nm in all the second pores is less than 20%, and the proportion of the second pores smaller than the average pore size measured by SEM by 20 nm in all the second pores is less than 20%, it indicates that the proportions of the pore structures with large and small pore sizes in the second pores are both relatively low. Therefore, the filter membrane not only has a higher flux, but also has a lower risk of virus leakage.

Optionally, in all the second pores, a proportion of the second pores with a deviation from the average pore size not greater than 25 nm is not less than 70%; and the deviation from the average pore size is defined as the absolute value of the difference between the pore size measured by SEM at the second pore and the average pore size measured by SEM at the second pores.

By adopting the above technical solution, the proportion of the second pores with the deviation from the average pore size not greater than 25 nm is relatively high, which can enable a more stably retention efficiency for viruses. Moreover, due to the fact that the pore size distribution of the second pores is mainly around the average pore size measured by SEM, the resistance experienced by the feed solution at different locations is relatively small, making it difficult to cause concentrated blockage of the second pores with small pore sizes, and leakage from the second pores with large pore sizes.

Optionally, a flux retention coefficient of the filter membrane is T, the T is not less than 0.4@(10 g/L), and the T is calculated by the following formula:

$$T = \frac{(V75 - V50)/V50 + (V50 - V25)/V25}{2} \times 100\% .$$

In the formula, V is a load of the filter membrane, and Va is the load when the flux decays by a%; and V25 is the load of the filter membrane when the flux decays by 25%, that is, V50 is the load of the filter membrane when the flux decays by 50% and V75 is the load of the filter membrane when the flux decays by 75%.

By adopting the above technical solution, T is not less than 0.4@(10g/L), which means that in a system with a protein concentration of 10 g/L, the flux retention coefficient T of the filter membrane is not less than 0.4. It should be noted that compared with the current common system with a protein concentration of 1 g/L, the system with the protein concentration of 10 g/L is more challenging for the load of the filter membrane, and it is more likely to cause blockage of the filter membrane.

The inventors of the invention have found that, on the basis of ensuring that the filter membrane has a good retention efficiency (high LRV) on small and medium-sized viruses, the flux decay rate of the filter membrane can be well characterized by the above formula. Compared with determining the flux decay rate of the filter membrane in a more qualitative way, it has a higher reference value to characterize and judge the flux decay rate of filter membrane in a quantitative way.

It should be noted that the measurement system for the above data is: protein concentration: 10 g/L, Buffer system: 50 mM acetic acid+100 mM NaCl, pH: 5.0, Cond: 30.5 μs/cm, density: 1 g/mL; pre-filtering is performed with a 0.22 μm biofilm in this system; and in this system, the protein is IVIG.

Optionally, a top wash LRV retention coefficient of the filter membrane is not less than 80%; the load of the filter membrane is not less than 120 L/m$^2$ when the flux decays by 75%; the protein yield of the filter membrane is not less than 98%; and the flux of the filter membrane is not less than 60 L/(h·m$^2$)@30psi.

By adopting the above technical solution, due to the special structure of the filter membrane in the invention, it can ensure that the filter membrane not only has a high flux, but also has a high load and LRV; and the filter membrane in the invention can be ensured to be used for a long time under a pressure of 30 psi. Furthermore, due to the low proportion of the pore structures with large and small pore sizes in the second pores of the filter membrane, the filter membrane can have a top wash LRV retention coefficient of not less than 80% after process retention.

the process retention refers to, during virus challenge testing, if the flux of the filter membrane decreases to 25% or if a challenge fluid is filtered to only a small amount at the bottom, the external pressure is removed, and a Buffer is added and left to stand for 15 min. Then, the virus challenge test is carried out after process retention by applying pressure again. The filtrate obtained from the test is collected separately, the virus titer is determined, and the LRV after process retention is calculated.

The top wash LRV retention coefficient refers to the ratio of LRV of the filter membrane before top wash to LRV of the filter membrane after top wash during virus challenge testing, which is characterized as a percentage.

In the second aspect, the invention provides a preparation process of the aforementioned filter membrane, which adopts the following technical solutions.

The preparation process of the filter membrane includes following process steps:

S1, casting: sequentially casting a first casting solution and a second casting solution onto a carrier to form a double-layer liquid film, where the first casting solution is prepared from following raw materials in parts by mass: 10-30 parts of a first membrane-forming polymer, and 30-150 parts of a first solvent system; the second casting solution is prepared from following raw materials in parts by mass: 10-20 parts of a second membrane-forming polymer, and 70-300 parts of a second solvent system; a ratio of a viscosity of the first casting solution to a viscosity of the second casting solution is (2-20): 1; a solid content of the first casting solution is not less than 15%, and a surface tension of the first solvent system is not greater than 30 dyne/cm;

S2, phase-separation curing: immersing the double-layer liquid film in a coagulating bath to allow the casting solutions to undergo phase-separation curing until the double-layer liquid film is completely cured to obtain a raw membrane, where the coagulating bath is water or ethanol; and

S3, regeneration: soaking the raw membrane in a regenerating bath for regeneration to obtain a regenerated membrane.

By adopting the above technical solution, the filter membrane in the invention is prepared by a double-layer casting process, that is, the first casting solution and the second casting solution with different solid contents and viscosities are respectively used for forming the pore structures with large and small pore sizes of the filter membrane. Since the phase separation mechanism in the invention is non-solvent induced phase separation (NIPS), the phase-separation curing of the casting solutions needs to be initiated by immersion and penetration through the coagulating bath into the casting solutions. Therefore, the phase separation start time of the first casting solution is not the same as that the second casting solution (the second casting solution close to the coagulating bath starts phase separation earlier). In addition, the formulation systems of the first casting solution and the second casting solution are roughly the same, which leads to mutual mass transfer between the first casting solution and the second casting solution. In combination with the aforementioned, there is a difference in the phase separation start time of the first casting solution and the second casting solution, which makes the first casting solution and the second casting solution undergo mass transfer to form a mixed casting solution after they are sequentially cast onto the carrier and before the phase separation of the first casting solution starts, and the mixed casting solution forms a solid content and viscosity gradient from the first casting solution to the second casting solution. It is also precisely because there are differences between the first casting solution, the mixed casting solution and the second casting solution, but their systems are roughly the same and their phase separation mechanisms are the same, the shapes and sizes of their fiber structures as well as the shapes and sizes of their pore structures have not changed obviously. Therefore, the cross section of the final filter membrane has no clear boundary line or delamination structure after being characterized by SEM.

The first casting solution with a higher solid content and viscosity mainly forms a separation layer with good retention efficiency for small and medium-sized viruses after phase-separation curing. The higher solid content of the first casting solution makes it easier to form a pore structure with a small pore size. The second casting solution with a lower solid content and viscosity mainly forms a pre-filtering layer with good retention efficiency for large-sized particles after phase-separation curing. The relatively low solid content of the second casting solution makes it easier to form a pore structure with a large pore size. The mixed casting solution formed by mixing the first casting solution and the second casting solution forms a pore size transition layer of the filter membrane, and a pore structure with a certain pore size change gradient is formed in the pore size transition layer.

In the preparation process of the filter membrane in the invention, the ratio of the viscosity of the first casting solution to the viscosity of the second casting solution should not be too large or too small. If the viscosity ratio of the first casting solution and the second casting solution is too large (e.g., more than 20: 1), it indicates that the viscosity of the first casting solution is too large or the viscosity of the second casting solution is too small. When the viscosity of the first casting solution is too large, it is difficult for the coagulating bath to penetrate into the first casting solution, resulting in uneven distribution of the coagulating bath in the first casting solution and uneven phase separation in each part of the first casting solution. The resulting pore structure is accordingly poor in uniformity, and thus the risk of virus leakage is higher. If the viscosity of the first casting solution is so high that it is difficult for the coagulating bath to penetrate, it will likely lead to failure in membrane preparation. Moreover, the significant difference in viscosities of the first casting solution and the second casting solution also affects the mutual mass transfer between the first casting solution and the second casting solution. If the mixed casting solution is not formed between the first casting solution and the second casting solution, the pore structure with a small pore size formed by the first casting solution and the pore structure with a large pore size formed by the second casting solution will form a region with sudden change in pore sizes at the junction. The region with sudden change in pore sizes is prone to blockage due to the concentrated retention of particles of different sizes, leading to rapid flux decay of the filter membrane. When the viscosity of the second casting solution is too low, it is easy to form a pre-filtering layer with an oversized pore structure, which has poor pressure resistance and is prone to structural collapse under pressure.

If the ratio of the viscosity of the first casting solution to the viscosity of the second casting solution is too small (e.g., less than 2: 1), it indicates that the viscosity of the first casting solution is too low or the viscosity of the second casting solution is too high. When the viscosity of the first casting solution is too low, it is easy for the coagulating bath to enter the first casting solution, but the coagulating bath is excessively diluted by a solvent system in the first casting solution, which can easily form a separation layer having a pore structure with a large pore size, making it difficult for the separation layer to achieve the required virus retention efficiency and increasing the risk of virus leakage. When the viscosity of the second casting solution is too high, the coagulating bath experiences significant resistance at the location of the second casting solution, making it difficult for the coagulating bath to penetrate and immerse into the interior of the casting solution to promote the phase separation of the casting solution, and resulting in uneven phase separation. Moreover, the second casting solution with high viscosity is prone to form a pre-filtering layer having a pore structure with a small pore size, resulting in a low contaminant holding capacity of the pre-filtering layer and a decrease in the load of the filter membrane.

It should be noted that the surface tension of the first solvent system should not be too high (less than 30 dyne/cm), because the non-solvent induced phase separation mechanism used in the invention determines that the coagulating bath is the most important phase separation power, and the speed of the coagulating bath immersing and penetrating into the casting solution has a significant impact on the phase separation speed of the casting solution. In order to improve the phase separation uniformity in each part of the casting solution, it is necessary to reduce the resistance of the coagulating bath in the casting solution, thereby improving the dispersion uniformity of the coagulating bath in each part of the casting solution, and reducing the uneven phase separation speed caused by the uneven dispersion of the coagulating bath. The uneven phase separation speed will lead to a decrease in the pore size distribution uniformity of the pore structure and an increase in the standard deviation of the pore size. For the separation layer, the reduced uniformity of the pore size distribution means that the risk of virus leaking from the pore structure with a large pore size is greatly increased. Since the viscosity of the first casting solution is much higher than the viscosity of the second casting solution, and the first casting solution is located below the second casting solution, so that it is more difficult for the coagulating bath to uniformly penetrate into the first casting solution. Therefore, the first casting solution has a higher requirement for the surface tension of the first solvent system.

By controlling the surface tension of the first solvent system, it is possible to ensure that the coagulating bath can more evenly immerse and penetrate into the interior of the first casting solution, thereby making the phase separation of the first casting solution more uniform and obtaining a substantially symmetrical and highly uniform pore structure. Due to the low proportion of the pore structures with extremely small pore sizes formed by the first casting solution with a high solid content as well as the low proportion of the pore structures with large pore sizes, not only can the risk of virus leakage be reduced, but also the filter membrane can be ensured to have a relatively large flux.

Optionally, the step S2 specifically includes:

S21, pretreatment: soaking the double-layer liquid film in a pretreatment bath for 0.5-10 s of pretreatment, to obtain a pretreated membrane, where the pretreatment bath is a 40-100% solvent aqueous solution; and
S22, curing: soaking the pretreated membrane in a coagulating bath until the pretreated membrane is completely subjected to phase-separation curing to obtain a raw membrane, where the coagulating bath is water or ethanol.

By adopting the above technical solution, the inventors of the invention have found that it is difficult to form pores in the surfaces of cellulose materials. If the casting solution is allowed to directly immerse the coagulating bath, even if the solid content of the second casting solution is low, it is easy to form a relatively dense skin structure, which may be related to the high sensitivity of cellulose materials to coagulating baths, that is, when the cellulose materials encounter high-concentration coagulating baths, they will be subjected to phase separation within a short period of time. It is generally believed that the faster the phase separation speed, the smaller the pore size of the formed pore structure. Therefore, the skin structure is likely to be formed on the surface where the second casting solution in contact with the coagulating bath. However, during the process of immersion and permeation of the coagulating bath into the casting solution after passing through a skin layer, the solvent system in the casting solution dilutes the coagulating bath, thus reducing the concentration of the coagulating bath and slowing down the phase separation speed of the casting solution. Combined with the lower solid content of the second casting solution, a pore structure with a larger pore size is formed by the casting solution in the skin structure. Further, because the larger pore structure can accommodate a larger amount of coagulating bath, this portion of coagulating bath can quickly penetrate into the mixed casting solution and the first casting solution, thus promoting rapid phase separation between the mixed casting solution and the first casting solution.

The invention specified that pretreatment is carried out before immersion of the coagulation bath, and the pretreatment bath may be a mixture of a solvent and water, or a pure solvent. When the pretreatment bath is a pure solvent, the surface of the second casting solution is diluted by the pure solvent after the double-layer liquid film is immersed, so that a certain low solid content region (lower than the solid content of the second casting solution) is formed on the surface of the second casting solution, and the possibility of forming a skin layer after immersion of the coagulating bath is greatly reduced accordingly. When the pretreatment bath is a mixture of a solvent and water, compared with the coagulation bath with a high concentration, the effect of gel phase separation is obviously reduced due to the addition of a certain amount of solvent in the pretreatment bath. Therefore, the second casting solution will be subjected to gel phase separation at a significantly slower rate in the pretreatment bath. Combined with the lower solid content of the second casting solution and the dilution effect of the solvent in the pretreatment bath, the possibility of skin layer formation in the second casting solution can also be greatly reduced.

It can be understood that the pretreatment bath is a 40-100% solvent aqueous solution, which means that the volume percentage of the solvent in the pretreatment bath is 40-100%, that is, the pretreatment bath may be a mixture of a solvent and water, or a pure solvent. the solvent refers to a substance that can dissolve a membrane-forming polymer. In the invention, the solvent may be one of acetone, dioxane, dimethylacetamide, N-methylpyrrolidone, acetic acid, propionic acid, butyric acid, and valeric acid.

Optionally, a surface tension of the second solvent system is not greater than 30 dyne/cm; and the surface tension of the first solvent system is smaller than that of the second solvent system.

By adopting the above technical solution, in the invention, the first casting solution has a higher viscosity, which means not only an increase in the coagulating bath resistance, but also the improvement of the mutual mass transfer resistance between the first casting solution and the second casting solution. The specific double-layer casting membrane-making process in the invention needs to avoid producing the region with sudden change in pore sizes, so that it is necessary for the first casting solution and the second casting solution to transfer mass to each other to form a mixed casting solution with viscosity gradient changes, which further ensures that the surface tension of the second solvent system in the second casting solution not greater than 30 dyne/cm can ensure a better mutual mass transfer ability of the first casting solution and the second casting solution, and the possibility of producing the region with sudden change in pore sizes inside the filter membrane is reduced.

In addition, the first casting solution has a higher viscosity and the first casting solution is located on the side away from the coagulating bath, which makes it more difficult for the coagulating bath to be immersed and penetrated into the first casting solution. Once the coagulating bath experiences significant heterogeneity in first casting solution due to an excessive mass transfer resistance, it will lead to a decrease in the uniformity of the phase separation speed at all the parts in the first casting solution, making it difficult to form a uniform and substantially symmetrical pore structure. By limiting the surface tension of the first solvent system to be smaller than the surface tension of the second solvent system, the mass transfer resistance of the coagulating bath in the first casting solution can be greatly reduced, so as to improve the phase separation uniformity of the first casting solution and ensure that the separation layer has a lower risk of virus leakage.

Optionally, the viscosity of the first casting solution is 10000-30000 cp, and the viscosity of the second casting solution is 1000-4000 cp.

By adopting the above technical solution, as mentioned above, the viscosity of the first casting solution should not be too high or too low, similarly, the viscosity of the second casting solution should not be too high or too low, and the ratio of the viscosities of the first casting solution and the second casting solution needs to be controlled within a certain range. On this basis, when the viscosity of the first casting solution is 10000-30000 cp, the viscosity of the second casting solution is 1000-4000 cp, and the coagulating bath is water or ethanol, the first casting solution and the second casting solution cannot only form a mixed casting solution due to their mutual mass transfer to obtain a pore size transition layer structure with pore size gradient changes, thus reducing the possibility of rapid flux decay caused by a sudden change in pore sizes, but can also ensure that the coagulating bath is dispersed in the casting solution (especially in the first casting solution) in a relatively fast and uniform manner, thus ensuring that the pore structure at the separation layer has a more uniform pore size.

It can be understood that the pore size uniformity of the pore structure at the separation layer is more important than that at the pre-filtering layer. This is because the pre-filtering layer is mainly used for retaining large particulate matters due to its pore structure with a large pore size, which has less influence on the retention efficiency of smaller viruses, and the pre-filtering layer has a certain pore size change gradient and a large thickness. Even if the pore size distribution uniformity of the pore structure of the pre-filtering layer is relatively poor, with the decrease in the pore size of the pore structure of the pre-filtering layer and the continuous stacking of the pore structures in the thickness direction, a good retention of large particulate matters can also be achieved. The pore size transition layer can also retain a small amount of large particulate matters leaked from the pre-filtering layer.

The separation layer is a main region in the filter membrane that plays a role in retaining viruses, and in order to ensure high contaminant holding capacity and high flux, the separation layer of the filter membrane in the invention is of a substantially symmetrical structure, which means that the risk of virus leakage in the separation layer of the filter membrane in the invention is relatively high. Once the pore size distribution at the separation layer is uneven, it is likely to lead to virus leakage, and thus the risk of virus leakage must be strictly controlled. Therefore, it is relatively important to control the casting solution system and phase separation conditions to improve the pore size distribution uniformity of the separation layer.

Optionally, the first membrane-forming polymer is at least one of cellulose diacetate, cellulose triacetate, cellulose propionate, cellulose acetate phthalate, cellulose acetate butyrate, and cellulose acetate propionate; and the second membrane-forming polymer is at least one of cellulose diacetate, cellulose triacetate, cellulose propionate, cellulose acetate phthalate, cellulose acetate butyrate, and cellulose acetate propionate.

Optionally, the first solvent system is a mixture of a first good solvent and a first pore-forming agent in a mass ratio of (1-8):(5-22);

the second solvent system is a mixture of a second good solvent and a second pore-forming agent in a mass ratio of (3-13):(4-17);
the first good solvent is at least one of acetone, dioxane, dimethylacetamide, N-methylpyrrolidone, acetic acid, propionic acid, butyric acid, and valeric acid;
the second good solvent is at least one of acetone, dioxane, dimethylacetamide, N-methylpyrrolidone, acetic acid, propionic acid, butyric acid, and valeric acid;
the first pore-forming agent is at least one of ethanol, 1-propanol, hexafluoroisopropanol or trifluoroethanol; and
the second pore-forming agent is at least one of ethanol, 1-propanol, hexafluoroisopropanol or trifluoroethanol.

By adopting the above technical solution, cellulose nitrate, cellulose acetate, cellulose propionate, and the like are all esterified products of cellulose, which can be regenerated to obtain regenerated cellulose through hydrolytic de-esterification under certain conditions. They are currently more mainstream cellulose-based membrane-forming materials, and are more environmentally friendly and green than copper ammonia fibers.

Each of the first solvent system and the second solvent system is obtained by mixing the good solvent with the pore-forming agent. It can be understood that a good solvent refers to a solvent that has good solubility for a membrane-forming polymer, while a pore-forming agent refers to a component that, although has poor solubility for a membrane-forming polymer, can promote the formation of a pore structure during a membrane preparation process, so as to facilitate the immersion and permeation of the coagulating bath into the casting solution.

Due to the different casting sequences and solid contents of the first casting solution and the second casting solution, their resistances to the coagulating bath are also different. In order to promote the rapid and uniform mass transfer of the coagulating bath in the first casting solution and the second casting solution, the first casting solution with higher solid content and farther distance from the coagulating bath requires more pore forming agents to promote mass transfer of the coagulating bath in the first casting solution. The inventors of the invention have found that, for the specific double-layer casting process of the invention, when the first solvent system is a mixture of the first good solvent and the first pore-forming agent in a mass ratio of (1-8):(5-22), and the second solvent system is a mixture of the second good solvent and the second pore-forming agent in a mass ratio of (3-13):(4-17), the filter membrane with high LRV and high load can be obtained.

In the invention, the pore-forming agents with low surface tension are specifically used. Compared with the common PVP and PEG pore-forming agents at present, the pore-forming agents with low surface tension can promote permeation of the coagulating bath into the casting solution and improve the phase separation uniformity in various regions inside the casting solution. Although PVP, PEG and other pore-forming agents can form pores after removal, the viscosities of these pore-forming agents are relatively high, which has a great resistance to mass transfer in the coagulating bath. Considering the high solid content and viscosity of the first casting solution, if PVP and PEG, which can form pores but have a thickening effect, are further added, it will have a greater impact on the phase separation uniformity of the first casting solution and more easily lead to the generation of large gradient and uneven pore structures.

Optionally, in the step S3, the regenerating bath is a sodium hydroxide aqueous solution, with a temperature of 20-40°C, and a regeneration time is 30-120 min.

Optionally, after the step S3, cross-linking of step S4 is also carried out, specifically, the regenerated membrane is placed in a cross-linking agent for cross-linking treatment, and a finished membrane is obtained after cross-linking treatment is completed and cleaning is performed, where the cross-linking agent is at least one of halogenated epoxides, dihalogenated alkanes, and dihalogenated alcohols.

By adopting the above technical solution, one of the characteristics of cellulose is its soft texture, which often results in poor mechanical properties of a regenerated fiber membrane obtained after hydrolysis regeneration, while the virus removal filtration often adopts a dead-end filtration method, which makes the filter membrane often be subjected to a high pressure from the feed solution. If the pressure resistance performance of the filter membrane is insufficient, it is likely to cause the collapse of the pore structure of the filter membrane. Once the pore structure of the filter membrane collapses due to pressure, its virus retention ability and flux will be significantly affected. Therefore, after step S3, further cross-linking treatment with the cross-linking agent is carried out to improve the pressure resistance performance of the filter membrane and reduce the possibility of structural collapse of the filter membrane under pressure.

To sum up, the invention includes at least one of the following beneficial technical effects:

1. The filter membrane provided by the invention takes cellulose raw materials with good hydrophilicity as membrane-forming materials, thus being relatively high in protein yield; the filter membrane has a PMI average pore size of 15-40 nm, thus having a good retention efficiency for small and medium-sized viruses; a pre-filtering layer is thicker and thus has a good retention efficiency for large particulate matters and a high contaminant holding capacity; a pore size transition layer of the filter membrane is small in thickness and pore size variation coefficient, so that the pore size of the pore size transition layer has not undergone a sudden change, making it less prone to local blockage and rapid flux decay due to concentrated retention caused by sudden pore size changes, and the pore size transition layer has a large load; and the substantially symmetrical structure of the separation layer ensures that the separation layer has a good retention efficiency for small and medium-sized viruses, while not introducing an extremely small pore structure, making it less prone to blockage and rapid flux decay due to the retention of a large number of viruses within a small range. The absence of an extremely small pore structure also allows the filter membrane to have a large flux. Therefore, the filter membrane in the invention not only has good virus retention efficiency, but also has high flux, load, and protein yield.

2. The invention further discloses the preparation process of the filter membrane, which adopts a double-layer coating process to form the separation layer with a small pore structure and the pre-filtering layer with a large pore structure using casting solutions with different viscosities, and because the systems of the two casting solutions are roughly the same, mutual mass transfer will occur after casting so as to form a mixed casting solution with viscosity gradient changes; and therefore, the possibility of presence of boundary lines in the filter membrane is greatly reduced, and the possibility of rapid flux decay of the filter membrane due to local concentrated retention is reduced.

## BRIEF DESCRIPTION OF THE DRAWINGS

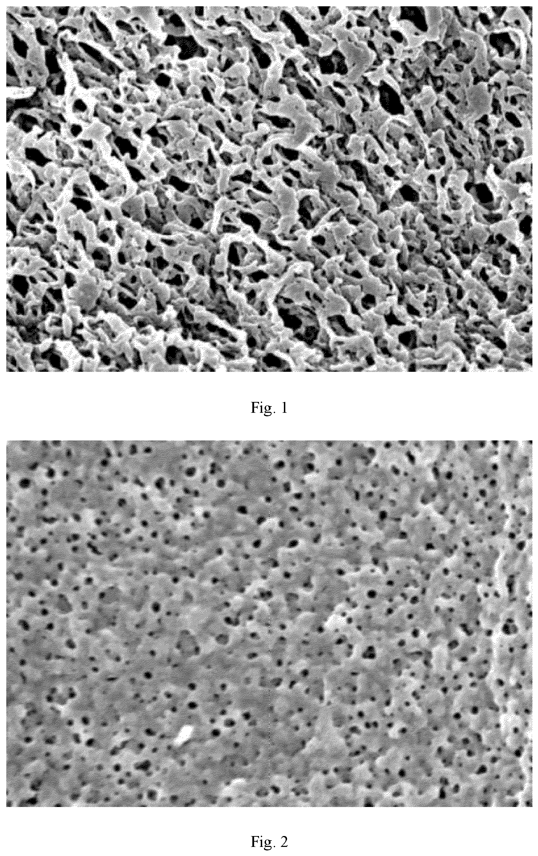

Fig. 1 is an SEM image of a liquid inlet surface of a filter membrane in Embodiment 6 of the invention, with a magnification of 20 k×;
Fig. 2 is an SEM image of a liquid outlet surface of the filter membrane in Embodiment 6 of the invention, with a magnification of 50 k×;

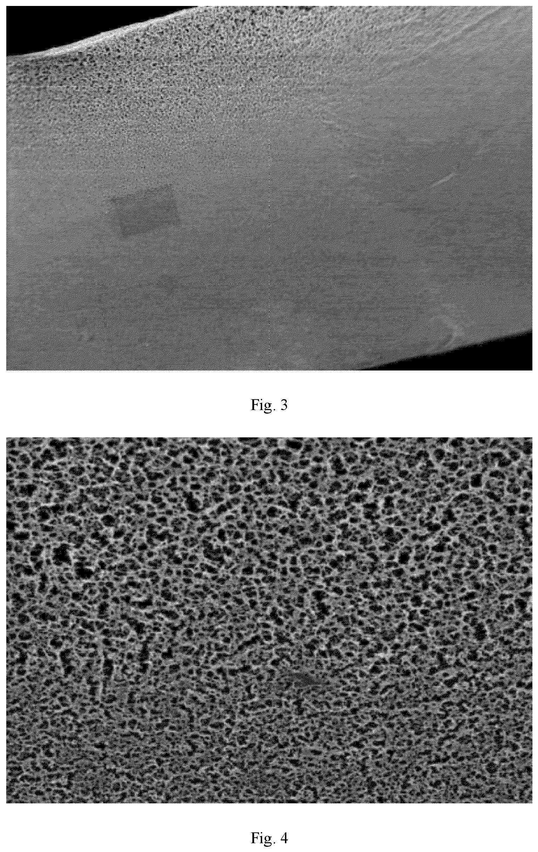

Fig. 3 is an SEM image of the overall cross section of the filter membrane in Embodiment 6 of the invention, with a magnification of 1 k×;
Fig. 4 is an SEM image of the cross section of a pore size variation layer of the filter membrane in Embodiment 6 of the invention, with a magnification of 10 k×;

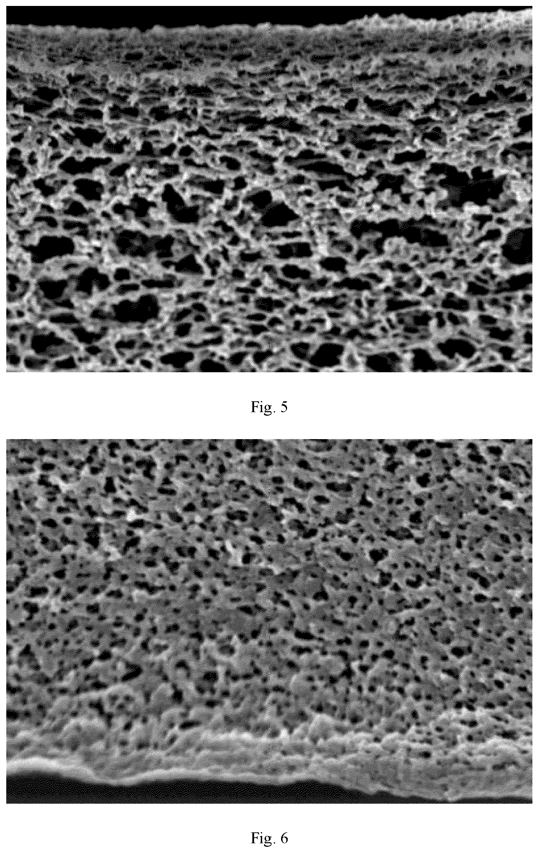

Fig. 5 is an SEM image of the cross section of the filter membrane near the liquid inlet surface in Embodiment 6 of the invention, with a magnification of 10 k×;
Fig. 6 is an SEM image of the cross section of the filter membrane near the liquid outlet surface in Embodiment 6 of the invention, with a magnification of 50 k×.

## DETAILED DESCRIPTION OF THE EMBODIMENTS

The invention will be described in further detail below in conjunction with accompanying drawings 1 to 6.

Embodiment 1

The embodiment of the invention discloses a preparation process of an asymmetric cellulose virus removal filter membrane, which includes following process steps:

S1, Casting, all materials were mixed according to the ratio in Table 1 to prepare a first casting solution and a second casting solution, and the first casting solution and the second casting solution were sequentially cast onto a carrier, that was, the first casting solution was located on the side where the carrier was available, and the second casting solution was located above the first casting solution; and a double-layer liquid film was formed after the first casting solution and the second casting solution were cast onto the carrier. In this embodiment, a first membrane-forming polymer and a second membrane-forming polymer were both cellulose diacetate, a first good solvent and a second good solvent were both dimethylacetamide, and a first pore-forming agent and a second pore-forming agent were both ethanol.
S2, Phase-separation curing specifically included:

S21, pretreatment: the double-layer liquid film was soaked in a pretreatment bath for 7 s of pretreatment, the pretreatment bath was an 85% acetone aqueous solution, and a pretreated membrane was obtained after the pretreatment; and
S22, curing: the pretreated membrane obtained after the pretreatment was soaked in a coagulating bath until the pretreated membrane was completely subjected to phase-separation curing to obtain a raw membrane, and in this embodiment, the coagulating bath was water.

S3, Regeneration: the fully cured raw membrane was immersed in a regeneration bath at 30°C for regeneration treatment for 70 min to promote the hydrolysis of cellulose acetate into regenerated cellulose, and the hydrolyzed membrane was taken out and washed with water until the pH was neutral, to obtain a regenerated membrane. In this embodiment, the regeneration bath was a sodium hydroxide aqueous solution, with a concentration of 0.05 mol/L and a temperature of 30°C.

S4, Cross-linking, the regenerated membrane obtained by regeneration was placed in a cross-linking agent for cross-linking treatment, and the finished membrane was obtained after the cross-linking treatment. In this embodiment, the cross-linking agent was an aqueous solution with an epichlorohydrin concentration of 10wt%, the cross-linking time was 25 min, and the cross-linking temperature was 50°C.

Embodiments 2-6

The main differences between Embodiments 2-6 and Embodiment 1 are the process parameters for each step and the composition ratios of casting solutions. See Table 1 for details.

Embodiment 7

The difference between Embodiment 7 and Embodiment 1 mainly lies in that, in Embodiment 7, a double-layer structure was not pretreated with a pretreatment bath, but the double-layer liquid film was directly immersed in a coagulating bath for phase-separation curing. In addition, the process parameters for each step and the composition ratio of the casting solutions are detailed in Table 1. The step S2 specifically included the following process step: S2, phase-separation curing: the double-layer liquid film was immersed in a coagulating bath to allow the casting solutions to undergo phase-separation curing until the double-layer liquid film was completely cured to obtain a raw membrane, and in this embodiment, the coagulating bath was water.

Embodiment 8

The difference between Embodiment 8 and Embodiment 1 mainly lies in that the regenerated membrane was not cross-linked in Embodiment 8. In addition, the process parameters for each step and the composition ratio of the casting solutions are detailed in Table 1.

Comparative Embodiment

Comparative Embodiment 1

The difference between Comparative Embodiment 1 and Embodiment 1 mainly lies in that Comparative Embodiment 1 adopted a single-layer casting process to prepare the filter membrane, that was, in Comparative Embodiment 1, only the first casting solution was cast on the carrier, and the second casting solution was not further cast above the first casting solution. In addition, the process parameters for each step and the composition ratio of the casting solutions are detailed in Table 1. The preparation process of the filter membrane in the Comparative Embodiment 1 includes the following steps:

S1, Casting, all materials were mixed according to the ratio in Table 1 to prepare a first casting solution, and the first casting solution was cast onto a carrier to form a single-layer liquid film. In this embodiment, a first membrane-forming polymer was cellulose diacetate, a first good solvent was N-methylpyrrolidone, and a first pore-forming agent was 1-propanol.

S2, Phase-separation curing specifically included:

S21, pretreatment: the single-layer liquid film was soaked in a pretreatment bath for 5 s of pretreatment, the pretreatment bath was an 80% acetone aqueous solution, and a pretreated membrane was obtained after the pretreatment; and

S22, curing: the pretreated membrane obtained after the pretreatment was soaked in a coagulating bath until the pretreated membrane was completely subjected to phase-separation curing to obtain a raw membrane, and in this embodiment, the coagulating bath was water.

S3, Regeneration: the fully cured raw membrane was immersed in a regeneration bath at 30°C for regeneration treatment for 60 min to promote the hydrolysis of cellulose acetate into regenerated cellulose, and the hydrolyzed membrane was taken out and washed with water until the pH was neutral, to obtain a regenerated membrane. In this embodiment, the regeneration bath was a sodium hydroxide aqueous solution, with a concentration of 0.05 mol/L and a temperature of 30°C.

S4, Cross-linking, the regenerated membrane obtained by regeneration was placed in a cross-linking agent for cross-linking treatment, and the finished membrane was obtained after the cross-linking treatment. In this embodiment, the cross-linking agent was an aqueous solution with an epichlorohydrin concentration of 10wt%, the cross-linking time was 25 min, and the cross-linking temperature was 50°C.

Comparative Embodiment 2

The difference between Comparative Embodiment 2 and Embodiment 1 mainly lies in that although the filter membrane was still prepared by a double-layer casting process in Comparative Embodiment 2, in a first solvent system and a second solvent system of Comparative Embodiment 2, PEG-400 was selected as a pore-forming agent. In addition, the process parameters for each step and the composition ratio of the casting solutions are detailed in Table 1.

Comparative Embodiment 3

The difference between Comparative Embodiment 3 and Embodiment 1 mainly lies in that although the filter membrane was still prepared by a double-layer casting process in Comparative Embodiment 3, the formulation of the first casting solution was adjusted in Comparative Embodiment 3 to make the solid content of the first casting solution less than 15% and the viscosity thereof lower than $10 \times 10^3$ cp. In addition, the formulation of the second casting solution was adjusted to make the viscosity of the second casting solution higher, so that the viscosity ratio between the first casting solution and the second casting solution was smaller. The specific composition ratio of the first casting solution and the second casting solution is detailed in Table 1.

Table 1 The ratio and process parameters for each embodiment and comparative embodiment

| Control item | | Embodiment 1 | Embodiment 2 | Embodiment 3 | Embodiment 4 | Embodiment 5 | Embodiment 6 | Embodiment 7 | Embodiment 8 | Comparative Embodiment 1 | Comparative Embodiment 2 | Comparative Embodiment 3 |
|---|---|---|---|---|---|---|---|---|---|---|---|---|
| First casting solution | First membrane-forming polymer | 18 | 22 | 12 | 25 | 29 | 25 | 15 | 30 | 25 | 40 | 15 |
| | First good solvent | 35 | 15 | 10 | 20 | 20 | 15 | 30 | 35 | 40 | 25 | 30 |
| | First pore-forming agent | 55 | 40 | 55 | 80 | 85 | 70 | 55 | 100 | 70 | 70 | 80 |
| | Solid content | 16.7 | 28.6 | 15.6 | 20.0 | 21.6 | 22.7 | 15.0 | 18.2 | 18.5 | 29.6 | 13.6 |

| | Content of pore-forming agent | Viscosity | Second casting solution | | | |
|---|---|---|---|---|---|---|
| | | | Second membrane-forming polymer | Second good solvent | Second pore-forming agent | Solid content |
| | 61.1 | 14.2 | 14 | 70 | 100 | 7.6 |
| | 72.7 | 27.7 | 16 | 90 | 130 | 6.8 |
| | 84.6 | 13.5 | 18 | 60 | 100 | 10.1 |
| | 80.0 | 17.2 | 15 | 60 | 90 | 9.1 |
| | 81.0 | 19.3 | 20 | 110 | 160 | 6.9 |
| | 82.4 | 21.9 | 12 | 45 | 90 | 8.2 |
| | 64.7 | 12.4 | 11 | 60 | 90 | 6.8 |
| | 74.1 | 16.6 | 15 | 70 | 120 | 7.3 |
| | 63.6 | 17.1 | / | / | / | / |
| | 73.7 | 37.6 | 15 | 80 | 100 | 7.7 |
| | 72.7 | 8.9 | 15 | 50 | 60 | 12.0 |

| | | | | | | | | | | | | |
|---|---|---|---|---|---|---|---|---|---|---|---|---|
| Content of pore-forming agent | | 58.8 | 59.1 | 62.5 | 60.0 | 59.3 | 66.7 | 60.0 | 63.2 | / | 55.6 | 54.5 |
| Viscosity | | 1.7 | 1.4 | 4.5 | 3.2 | 1.4 | 2.2 | 1.5 | 1.5 | / | 4.9 | 6.3 |
| Viscosity ratio of casting solutions | | 8.4 | 19.8 | 3.0 | 5.4 | 13.8 | 10.0 | 8.3 | 11.1 | / | 7.7 | 1.4 |
| Solid content difference of casting solutions | | 9.1 | 21.8 | 5.5 | 10.9 | 14.7 | 14.6 | 8.2 | 10.9 | / | 21.9 | 1.6 |
| Pretreatment | Pretreatment time | 7 | 1 | 8 | 5 | 3 | 4 | / | 6 | 15 | 5 | 5 |
| | Pretreatment bath concentration | 85 | 45 | 100 | 90 | 80 | 80 | / | 70 | 90 | 90 | 90 |

| Curing | Coagulating bath system | Water | Water | Water | Water | Water | Water | Ethanol | Water | Water | Water | Water |
|---|---|---|---|---|---|---|---|---|---|---|---|---|
| Regeneration | Regeneration bath temperature | 30 | 35 | 35 | 30 | 20 | 30 | 30 | 30 | 30 | 30 | 30 |
| | Regeneration treatment time | 70 | 70 | 80 | 80 | 100 | 80 | 80 | 80 | 80 | 80 | 80 |
| Notes | In this table, the unit of each material in the casting solution is parts by weight, the units of solid content and pore-forming agent proportion are wt%, the unit of pretreatment time is s, the unit of regeneration treatment time is min, the unit of pretreatment bath concentration is v%, and the unit of regeneration bath temperature is °C. | | | | | | | | | | | |

Performance testing and performance data

I. Virus challenge test

A virus challenge test method was conducted in accordance with the relevant regulations in PDA TR41, with a model virus being PP7 bacteriophage or hepatitis B virus, a model protein being IVIG, and a buffer being PBS. During the testing process, the changes in flux and load over time were recorded to obtain the LRV, flux, and load of the filter membrane. When the flux of the filter membrane decreases to 25% or a challenge fluid is filtered to only a small amount at the bottom, a top washing operation was performed. Specifically, the external pressure was removed, a Buffer was added and left to stand for 15 min, and then, the pressure was increased to 30 psi for virus challenge testing after process retention. The filtrate collected at this time was a top wash filtrate, which was separately collected and tested for virus titer. The LRV after top wash was calculated to further determine a top wash LRV retention coefficient.

The data related to the surface morphological parameters for each embodiment and the comparative embodiment are recorded in Table 2:

Table 2 Surface morphological parameters for each embodiment and the comparative embodiment

| Data | Embodiment 1 | Embodiment 2 | Embodiment 3 | Embodiment 4 | Embodiment 5 | Embodiment 6 | Embodiment 7 | Embodiment 8 | Comparative | Comparative | Comparative |
|---|---|---|---|---|---|---|---|---|---|---|---|
| Membrane thickness/μm | 106 | 64 | 64 | 58 | 106 | 79 | 53 | 102 | 45 | 56 | 67 |
| Pre-filtering layer thickness/μm | 52 | 24 | 25 | 27 | 73 | 42 | 29 | 63 | / | / | / |
| Pre-filtering layer pore size/nm | 607 | 678 | 524 | 532 | 547 | 563 | 554 | 701 | / | / | / |
| Pre-filtering layer fiber diameter/nm | 96 | 78 | 134 | 114 | 81 | 107 | 127 | 69 | / | / | / |
| Separation layer thickness/μm | 44 | 36 | 23 | 22 | 27 | 29 | 20 | 31 | / | / | / |
| Separation layer pore size/nm | 62 | 35 | 73 | 49 | 45 | 44 | 72 | 63 | / | / | / |
| Separation layer fiber diameter/nm | 33 | 24 | 35 | 30 | 28 | 27 | 35 | 32 | / | / | / |

| Pore size of first pore at liquid inlet surface/nm | 1082 | 677 | 1849 | 836 | 936 | 984 | 529 | 1263 | / | / | / |
|---|---|---|---|---|---|---|---|---|---|---|---|
| Pore size of second pore at liquid outlet surface/nm | 50 | 27 | 57 | 38 | 36 | 36 | 57 | 43 | / | / | / |
| Proportion of large pores in second pores/% | 15 | 4 | 16 | 8 | 8 | 6 | 18 | 14 | / | / | / |
| Proportion of small pores in second pores/% | 9 | 17 | 6 | 7 | 7 | 5 | 6 | 11 | / | / | / |
| Proportion of medium pores in the second pores/% | 74 | 74 | 79 | 84 | 85 | 91 | 78 | 72 | / | / | / |
| Pore size transition layer thickness/μm | 10 | 4 | 16 | 9 | 6 | 8 | 4 | 8 | / | / | / |
| Pore size of pore size transition layer/nm | 216 | 238 | 175 | 179 | 187 | 197 | 185 | 231 | / | / | / |
| Intermediate pore size difference of pore size | 64 | 78 | 54 | 58 | 61 | 63 | 56 | 75 | / | / | / |

| | | | | | | | | | | | |
|---|---|---|---|---|---|---|---|---|---|---|---|
| transition layer/nm | | | | | | | | | | | |
| Fiber diameter in the first half of pore size transition layer/nm | 35 | 37 | 37 | 32 | 30 | 31 | 38 | 34 | / | / | / |
| Fiber diameter in the second half of pore size transition layer/nm | 33 | 32 | 33 | 28 | 30 | 30 | 36 | 33 | / | / | / |
| Difference between the two fiber diameters/nm | 2 | 5 | 4 | 4 | 0 | 1 | 2 | 1 | / | / | / |

The virus retention related data of the filter membrane in each embodiment and comparative embodiment are recorded in Table 3:

| Data | Embodiment 1 | Embodiment 2 | Embodiment 3 | Embodiment 4 | Embodiment 5 | Embodiment 6 | Embodiment 7 | Embodiment 8 | Comparative Embodiment 1 | Comparative Embodiment 2 | Comparative Embodiment 3 |
|---|---|---|---|---|---|---|---|---|---|---|---|

| | | | | | | | | | | | |
|---|---|---|---|---|---|---|---|---|---|---|---|
| PMI average pore size/nm | 23 | 18 | 32 | 25 | 23 | 22 | 35 | 22 | 14 | 19 | 42 |
| $S_{(0-0.1)/(0.9-1)}$ | 1.8 | 3.7 | 1.6 | 2.1 | 2.5 | 2.2 | 1.7 | 1.9 | / | / | / |
| $S_{(0-0.1)/(0.4-0.5)}$ | 1.2 | 1.5 | 1.2 | 1.3 | 1.3 | 1.3 | 1.2 | 1.3 | / | / | / |
| $S_{(0.5-0.6)/(0.9-1)}$ | 1.2 | 1.4 | 1.1 | 1.2 | 1.3 | 1.2 | 1.2 | 1.2 | / | / | / |
| Ratio of the aforesaid two data | 1 | 1.1 | 1.1 | 1.1 | 1 | 1.1 | 1 | 1.1 | / | / | / |
| Flux retention coefficient T | 0.66 | 0.46 | 0.44 | 0.44 | 0.69 | 0.58 | 0.42 | 0.46 | 0.21 | 0.17 | 0.32 |

| | | | | | | | | | | | |
|---|---|---|---|---|---|---|---|---|---|---|---|
| LRV of PP7 | 7.4 | 8.3 | / | 6.7 | 7.2 | 7.7 | / | 7.6 | >8.5 | >8.5 | / |
| Top wash LRV retention coefficient/% | 92 | 92 | / | 100 | 95 | 100 | / | 82 | 83 | 95 | / |
| LRV of hepatitis B virus | / | / | 7.7 | / | / | / | 7.3 | / | / | / | 3.4 |
| Top wash LRV retention coefficient/% | / | / | 95 | / | / | / | 95 | / | / | / | 75 |

| V75/L/m² | 259 | 197 | 168 | 174 | 273 | 237 | 154 | 206 | 87 | 68 | 79 |
| Flux/L/(h·m²) | 92 | 79 | 122 | 99 | 94 | 89 | 125 | 91 | 39 | 47 | 87 |

Table 3 Virus retention related data for each embodiment and comparative embodiment

Conclusion

The filter membranes of Embodiments 1-6 in the invention all have high flux and good virus retention efficiency. Because the filter membrane in Embodiment 7 had not been pretreated, the pore structure of the liquid inlet surface has an obviously smaller pore size, which made the filter membrane have a smaller load. However, a cross-linking operation was not carried out in Embodiment 8, which resulted in the filter membrane having a buffer zone structure with a larger pore size but lower load. This might be due to the poor pressure resistance of the uncross-linked fiber structure, and the pore structure collapsed to a certain extent under pressure.

The filter membrane in the Comparative Embodiment 1 was prepared by a single-layer casting process, and as there was no two layers of different casting solutions for mutual mass transfer to form a mixed casting solution with viscosity and solid content changing in a gradient, a pore size transition layer structure was not formed. When observing the SEM image of the cross section of the filter membrane in Comparative Embodiment 1, it was found that the pore size of the filter membrane in the thickness direction first changed from large to small and then became large, which was different from the trend of pore size changing roughly from large to small of the filter membrane prepared in each embodiment of the invention. Moreover, during the preparation of the filter membrane, in order to ensure a good virus retention efficiency, the casting solutions were controlled to have a higher viscosity and solid content (compared with the viscosity and solid content of the second casting solution in each embodiment), and the casting solution with higher viscosity had higher difficulty in pore opening on the surface, so that it was necessary to pretreat the casting solution for a longer time to ensure that a large pore structure could be formed on the surface of the casting solution. However, although the large pore structure was formed on the surface of the casting solution after a long-term pretreatment, the porous body near the liquid inlet surface of the prepared filter membrane was not resistant to high pressure due to the excessively large pore structure. Under a pressure of 30 psi, the porous body near the liquid inlet surface of the filter membrane undergone structural collapse, combined with the large proportion of small pore structure in the filter membrane, resulting in low flux and load, and low practicality.

Although the filter membrane in Comparative Embodiment 2 was prepared using a double-layer casting process, the use of PEG as a pore-forming agent resulted in a higher surface tension compared to the low surface tension pore-forming agent used in the invention. In addition, the viscosity of PEG pore-forming agent was also significantly higher. In Comparative Embodiment 2, the viscosity ratio of the first casting solution to the second casting solution was greater than 20:1. The high viscosity combined with the high viscosity ratio made mass transfer between the first casting solution and the second casting solution difficult, so that no obvious pore size change layer structure was formed in Comparative Embodiment 2. This resulted in a significant sudden change in pore size between the pre-filtering layer with a large pore structure and the separation layer with a small pore structure, making it prone to local blockage and resulting in a lower load of the filter membrane. In addition, the high viscosity of the casting solution also made the coagulating bath suffer higher resistance in the casting solution, and the dispersion uniformity of the coagulating bath was poor, resulting in an increased risk of virus leakage.

Although the filter membrane in Comparative Embodiment 3 was also prepared using a double-layer casting process, the solid content of the first casting solution was less than 15%, while the solid content and viscosity of the second casting solution were higher. At this time, the viscosity ratio of the first casting solution and the second casting solution was small, only 1.4:1. Because the coagulating bath encountered considerable resistance at the second casting solution, it was difficult for the permeation and immersion of the coagulating bath into the casting solution, resulting in poor dispersion uniformity of the coagulating bath. The pore structure formed by the second casting solution with a higher solid content had a smaller pore size and a lower contaminant holding capacity, resulting in a lower load of the filter membrane. In addition, due to the delayed start time of phase separation in the first casting solution, the uniformity of materials inside the first casting solution also decreased, resulting in poor pore size uniformity of the separation layer structure obtained after phase-separation curing, and a higher risk of virus leakage.

The specific embodiments are only an explanation of the invention, and are not a limitation to the invention. Those skilled in the art can make modifications to the embodiments without creative contribution as needed after reading the description, but they will be protected by the patent law as long as they are within the scope of the claims of the invention.

## Claims

1. An asymmetric regenerated cellulose virus removal filter membrane, comprising a porous body having non-directional tortuous paths therein, one side surface of the porous body is a liquid inlet surface, and another side surface of the porous body is a liquid outlet surface, **characterized by**:

   an average pore size measured by scanning electron microscope (SEM) at the liquid inlet surface is larger than an average pore size measured by SEM at the liquid outlet surface; the porous body comprises a pre-filtering layer, a pore size transition layer and a separation layer in sequence from the liquid inlet surface to the liquid outlet surface, one side of the pre-filtering layer is the liquid inlet surface, and one side of the separation layer is the liquid outlet surface;
   a PMI average pore size of the filter membrane is 15-40 nm;
   the pre-filtering layer has a thickness of 20-80 $\mu$m;
   a pore size variation coefficient $S_{(0-0.1)/(0.9-1)}$ of the pore size transition layer is not greater than 5, and the pore size transition layer has a thickness of not greater than 20 $\mu$m;
   the separation layer has a substantially symmetrical structure; and
   the pore size transition layer is considered to have a membrane thickness of 0 on a side close to the liquid inlet surface, and a membrane thickness of 1 on a side close to the liquid outlet surface, wherein

$$\text{pore size variation coefficient } S_{x/y} = \frac{\text{an average pore size measured by SEM at the region x of the pore size transition layer}}{\text{an average pore size measured by SEM at the region y of the pore size transition layer}}.$$

2. The asymmetric regenerated cellulose virus removal filter membrane according to claim 1, **characterized by**: the pore size variation coefficient $S_{(0-0.1)/(0.4-0.5)}$ of the pore size transition layer is 1.1-1.6; and/or the pore size variation coefficient $S_{(0.5-0.6)/(0.9-1)}$ of the pore size transition layer is 1.1-1.6.

3. The asymmetric regenerated cellulose virus removal filter membrane according to claim 1, **characterized by**: a ratio of the pore size variation coefficient $S_{(0-01)/(0.4-0.5)}$ of the pore size transition layer to the pore size variation coefficient $S_{(0.5-0.6)/(0.9-1)}$ of the pore size transition layer is 0.8-1.2.

4. The asymmetric regenerated cellulose virus removal filter membrane according to claim 1, **characterized by**: a difference between the average pore size measured by SEM in the region of 0.3-0.5 of the pore size transition layer and the average pore size measured by SEM in the region of 0.5-0.7 of the pore size transition layer is 30-100 nm.

5. The asymmetric regenerated cellulose virus removal filter membrane according to claim 1, **characterized by**: the average pore size measured by SEM at the pore size transition layer is 100-300 nm, and the average pore size measured by SEM at the pore size transition layer is less than the average pore size measured by SEM at the pre-filtering layer and less than the average pore size measured by SEM at the separation layer.

6. The asymmetric regenerated cellulose virus removal filter membrane according to claim 1, **characterized by**: a fiber diameter measured by SEM in the region of 0-0.5 of the pore size transition layer is 20-50 nm; and a fiber diameter measured by SEM in the region of 0.5-1 of the pore size transition layer is 20-45 nm.

7. The asymmetric regenerated cellulose virus removal filter membrane according to claim 1, **characterized by**: a difference between the fiber diameter measured by SEM in the region of 0.3-0.5 of the pore size transition layer to the fiber diameter measured by SEM in the region of 0.5-0.7 of the pore size transition layer is not greater than 10 nm.

8. The asymmetric regenerated cellulose virus removal filter membrane according to claim 1, **characterized by**: the average pore size measured by SEM at the pre-filtering layer is 200-800 nm; and the average pore size measured by SEM at the separation layer is 30-80 nm, and the separation layer has a thickness of 20-50 $\mu$m.

9. The asymmetric regenerated cellulose virus removal filter membrane according to claim 1, **characterized by**: the change gradient of the average pore size measured by SEM at the pre-filtering layer is at least 2 nm/$\mu$m larger than that of the average pore size measured by SEM at the separation layer, and the change gradient of the average pore size measured by SEM at the separation layer is not greater than 3 nm/$\mu$m.

10. The asymmetric regenerated cellulose virus removal filter membrane according to claim 1, **characterized by**: a fiber diameter measured by SEM at the pre-filtering layer is 60-150 nm; and a fiber diameter measured by SEM at the separation layer is 20-40 nm.

11. The asymmetric regenerated cellulose virus removal filter membrane according to claim 1, **characterized by**: the liquid inlet surface comprises a plurality of strip-shaped first fibers, the plurality of first fibers are connected to each other, and adjacent first fibers surround to form a first pore;

   an average pore size measured by SEM at the first pores is 350-2000 nm; and/or,
   the liquid outlet surface comprises a plurality of circular hole-shaped second pores; and
   an average pore size measured by SEM at the second pores is 25-45 nm.

12. The asymmetric regenerated cellulose virus removal filter membrane according to claim 11, **characterized by**: in all the second pores, the second pores larger than the average pore size measured by SEM by 30 nm account for no more than 20% of the total number of second pores; and in all the second pores, the second pores smaller than the average pore size measured by SEM by 20 nm account for no more than 20% of the total number of second pores.

13. The asymmetric regenerated cellulose virus removal filter membrane according to claim 11, **characterized by**: in all the second pores, a proportion of the second pores with a deviation from the average pore size not greater than 25 nm is not less than 70%; and the deviation from the average pore size is defined as the absolute value of the difference between the pore size measured by SEM at the second pore and the average pore size measured by SEM at the second pores.

14. The asymmetric regenerated cellulose virus removal filter membrane according to claim 1, **characterized by**: a flux retention coefficient of the filter membrane is T, the T is not less than 0.4@(10 g/L), and the T is calculated by the following formula:

$$T = \frac{(V75-V50)\ /V50+(V50-V25)/V25}{2} \times 100\% ;$$

in the formula, V is a load of the filter membrane, and Va is the load when the flux decays by a%; and V25 is the load of the filter membrane when the flux decays by 25%, that is, V50 is the load of the filter membrane when the flux decays by 50% and V75 is the load of the filter membrane when the flux decays by 75%.

15. The asymmetric regenerated cellulose virus removal filter membrane according to claim 1, **characterized by**: a top wash log reduction value (LRV) retention coefficient of the filter membrane is not less than 80%; the load of the filter membrane is not less than 120 L/m$^2$ when the flux decays by 75%; the protein yield of the filter membrane is not less than 98%; and the flux of the filter membrane is not less than 60 L/(h·m$^2$)@30psi.

16. A preparation process of the filter membrane according to any one of claims 1 to 15, **characterized by** comprising following process steps:

> S1, casting: sequentially casting a first casting solution and a second casting solution onto a carrier to form a double-layer liquid film, wherein the first casting solution is prepared from following raw materials in parts by mass: 10-30 parts of a first membrane-forming polymer, and 30-150 parts of a first solvent system; the second casting solution is prepared from following raw materials in parts by mass: 10-20 parts of a second membrane-forming polymer, and 70-300 parts of a second solvent system; a ratio of a viscosity of the first casting solution to a viscosity of the second casting solution is (2-20): 1; a solid content of the first casting solution is not less than 15%, and a surface tension of the first solvent system is not greater than 30 dyne/cm;
> S2, phase-separation curing: immersing the double-layer liquid film in a coagulating bath to allow the casting solutions to undergo phase-separation curing until the double-layer liquid film is completely cured, to obtain a raw membrane, wherein the coagulating bath is water or ethanol; and
> S3, regeneration: soaking the raw membrane in a regenerating bath for regeneration to obtain a regenerated membrane.

17. The preparation process of the filter membrane according to claim 16, **characterized by**: the step S2 specifically comprises:

> S21, pretreatment: soaking the double-layer liquid film in a pretreatment bath for 0.5-10 s of pretreatment, to obtain a pretreated membrane, wherein the pretreatment bath is a 40-100% solvent aqueous solution; and
> S22, curing: soaking the pretreated membrane in a coagulating bath until the pretreated membrane is completely subjected to phase-separation curing to obtain a raw membrane, wherein the coagulating bath is water or ethanol.

18. The preparation process of the filter membrane according to claim 16 or 17, **characterized by**: a surface tension of the second solvent system is not greater than 30 dyne/cm; and the surface tension of the first solvent system is smaller than that of the second solvent system.

19. The preparation process of the filter membrane according to claim 16 or 17, **characterized by**: the viscosity of the first casting solution is 10000-30000 cp, and the viscosity of the second casting solution is 1000-4000 cp.

20. The preparation process of the filter membrane according to claim 16 or 17, **characterized by**:

> the first membrane-forming polymer is at least one of cellulose diacetate, cellulose triacetate, cellulose propionate, cellulose acetate phthalate, cellulose acetate butyrate, and cellulose acetate propionate; and
> the second membrane-forming polymer is at least one of cellulose diacetate, cellulose triacetate, cellulose propionate, cellulose acetate phthalate, cellulose acetate butyrate, and cellulose acetate propionate.

21. The preparation process of the filter membrane according to claim 16 or 17, **characterized by**:

> the first solvent system is a mixture of a first good solvent and a first pore-forming agent in a mass ratio of (1-8):(5-22);
> the second solvent system is a mixture of a second good solvent and a second pore-forming agent in a mass ratio of (3-13):(4-17);
> the first good solvent is at least one of acetone, dioxane, dimethylacetamide, N-methylpyrrolidone, acetic acid, propionic acid, butyric acid, and valeric acid;
> the second good solvent is at least one of acetone, dioxane, dimethylacetamide, N-methylpyrrolidone, acetic acid, propionic acid, butyric acid, and valeric acid;
> the first pore-forming agent is at least one of ethanol, 1-propanol, hexafluoroisopropanol or trifluoroethanol; and
> the second pore-forming agent is at least one of ethanol, 1-propanol, hexafluoroisopropanol or trifluoroethanol.

22. The preparation process of the filter membrane according to claim 16 or 17, **characterized by**: in the step S3, the regenerating bath is a sodium hydroxide aqueous solution, with a temperature of 20-40°C, and a regeneration time is 30-120 min.

23. The preparation process of the filter membrane according to claim 16 or 17, **characterized by**: after the step S3, cross-linking of step S4 is also carried out, specifically, the regenerated membrane is placed in a cross-linking agent for cross-linking treatment, and a finished membrane is obtained after cross-linking treatment is completed and cleaning is performed, wherein the cross-linking agent is at least one of halogenated epoxides, dihalogenated alkanes, and dihalogenated alcohols.

Fig. 1

Fig. 2

Fig. 3

Fig. 4

Fig. 5

Fig. 6

## INTERNATIONAL SEARCH REPORT

| | International application No. |
|---|---|
| | **PCT/CN2023/110374** |

**A. CLASSIFICATION OF SUBJECT MATTER**

B01D71/10(2006.01)i; B01D71/14(2006.01)i; B01D67/00(2006.01)i; B01D69/12(2006.01)i

According to International Patent Classification (IPC) or to both national classification and IPC

**B. FIELDS SEARCHED**

Minimum documentation searched (classification system followed by classification symbols)

B01D

Documentation searched other than minimum documentation to the extent that such documents are included in the fields searched

Electronic data base consulted during the international search (name of data base and, where practicable, search terms used)

CNABS, CNTXT, DWPI, WPABS, ENTXT, WPABSC, ENTXTC, CNKI, Patentics: 杭州科百特过滤器材有限公司, 贾建东, 滤膜, 膜, 非对称, 不对称, 再生纤维素, 纤维素, 除病毒, 病毒, 过渡, 中间, 梯度, 孔径, 孔, 流延, 浇筑, 浇注, 浇铸, 铸膜, 液膜, membrane?, film?, filter+, filtr+, cellulose, virus+, transit+, pore, porous, diameter, cast+

**C. DOCUMENTS CONSIDERED TO BE RELEVANT**

| Category* | Citation of document, with indication, where appropriate, of the relevant passages | Relevant to claim No. |
|---|---|---|
| PX | CN 116236925 A (HANGZHOU COBETTER FILTRATION EQUIPMENT CO., LTD.) 09 June 2023 (2023-06-09)<br>claims 1-23 | 1-23 |
| X | CN 114887500 A (HANGZHOU COBETTER FILTRATION EQUIPMENT CO., LTD.) 12 August 2022 (2022-08-12)<br>description, paragraphs 8-52, and figures 1-14 | 1-15 |
| Y | CN 114887500 A (HANGZHOU COBETTER FILTRATION EQUIPMENT CO., LTD.) 12 August 2022 (2022-08-12)<br>description, paragraphs 8-52, and figures 1-14 | 16-23 |
| X | CN 115025641 A (HANGZHOU COBETTER FILTRATION EQUIPMENT CO., LTD.) 09 September 2022 (2022-09-09)<br>description, paragraphs 11-94, and figures 1-3 | 1-15 |
| Y | CN 115025641 A (HANGZHOU COBETTER FILTRATION EQUIPMENT CO., LTD.) 09 September 2022 (2022-09-09)<br>description, paragraphs 11-94, and figures 1-3 | 16-23 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 October 2023** | **26 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/110374** |

### C. DOCUMENTS CONSIDERED TO BE RELEVANT

| Category* | Citation of document, with indication, where appropriate, of the relevant passages | Relevant to claim No. |
| --- | --- | --- |
| Y | CN 110721595 A (WUZHOU CAS DINGXIN INDUSTRIAL TECHNOLOGY RESEARCH INSTITUTE (LIMITED PARTNERSHIP)) 24 January 2020 (2020-01-24) description, paragraphs 5-30 | 16-23 |
| Y | CN 110732246 A (WUZHOU CAS DINGXIN INDUSTRIAL TECHNOLOGY RESEARCH INSTITUTE (LIMITED PARTNERSHIP)) 31 January 2020 (2020-01-31) description, paragraphs 5-30 | 16-23 |
| A | WO 2022208201 A1 (3M INNOVATIVE PROPERTIES COMPANY) 06 October 2022 (2022-10-06) abstract | 1-23 |
| A | JP 2006055784 A (ASAHI KASEI CORP.) 02 March 2006 (2006-03-02) abstract | 1-23 |

Form PCT/ISA/210 (second sheet) (July 2022)

**INTERNATIONAL SEARCH REPORT**
Information on patent family members

International application No.

**PCT/CN2023/110374**

| Patent document cited in search report | | | Publication date (day/month/year) | Patent family member(s) | | | Publication date (day/month/year) |
|---|---|---|---|---|---|---|---|
| CN | 116236925 | A | 09 June 2023 | None | | | |
| CN | 114887500 | A | 12 August 2022 | None | | | |
| CN | 115025641 | A | 09 September 2022 | CN | 115025641 | B | 25 November 2022 |
| CN | 110721595 | A | 24 January 2020 | None | | | |
| CN | 110732246 | A | 31 January 2020 | None | | | |
| WO | 2022208201 | A1 | 06 October 2022 | None | | | |
| JP | 2006055784 | A | 02 March 2006 | None | | | |

Form PCT/ISA/210 (patent family annex) (July 2022)

**REFERENCES CITED IN THE DESCRIPTION**

**Patent documents cited in the description**

- CN 113842792 A
- US 20200238221 A1
- CN 1759924 B